(19) **Europäisches Patentamt / European Patent Office / Office européen des brevets**

(11) **EP 1 971 159 A2**

(12) # EUROPEAN PATENT APPLICATION

(43) Date of publication:
**17.09.2008 Bulletin 2008/38**

(51) Int Cl.:
***H04N 13/00*** *(2006.01)*

(21) Application number: **08000575.4**

(22) Date of filing: **14.01.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **15.03.2007 JP 2007067169**

(71) Applicant: **Kabushiki Kaisha Toshiba
Minato-ku,
Tokyo 105-8001 (JP)**

(72) Inventors:
- **Saishu, Tatsuo
  Tokyo 105-8001 (JP)**
- **Fukushima, Rieko
  Tokyo 105-8001 (JP)**
- **Taira, Kazuki
  Tokyo 105-8001 (JP)**
- **Hirayama, Yuzo
  Tokyo 105-8001 (JP)**

(74) Representative: **HOFFMANN EITLE
Patent- und Rechtsanwälte
Arabellastrasse 4
81925 München (DE)**

(54) **Three-dimensional image display device, method for displaying three-dimensional image, and structure of three-dimensional image data**

(57) A three-dimensional image display device includes a display section (331) having pixels arranged in a matrix and each includes three color component subpixels arranged in vertical stripes, and a light beam control element (332, 334, 333) installed opposite the display section (331) and having optical apertures arranged in a substantially horizontal direction and extending linearly in a direction inclined at an angle atan (1/n) (n = 4 or 5) to a direction of pixel columns. The average value of the horizontal pitch of element images displayed in the display section (331) is specified to be equal to or greater than natural number m times as large as a pixel horizontal pitch (m < n). The horizontal pitch of the light beam control element (332, 334, 333)al is specified to be equal to or smaller than natural number m times as large as the pixel horizontal pitch.

FIG.7

## Description

The present invention relates to a three-dimensional image display device, a method for displaying a three-dimensional image, and a structure of three-dimensional image data.

Various schemes are known for three-dimensional image display devices capable of displaying motion pictures, that is, three-dimensional displays. In recent years, a growing demand has been made particularly of a scheme of a flat panel type which requires no dedicated glasses or the like. As a three-dimensional motion picture display device of this type, a scheme utilizing the principle of holography is known. With this scheme, it is difficult to realize full color motion pictures. Another known scheme installs a light beam control element immediately in front of a display panel serving as a three-dimensional image display device, the light beam control element controllably directing light beams from the display panel toward an observer. This scheme uses, as the display panel, a display device such as a direct-viewing or projection liquid crystal display device or plasma display device which has fixed pixel positions, to allow full color motion pictures to be relatively easily realized.

The light beam control element is commonly called a parallax barrier. The light beam control element controls light beams so that even if the same position on the light beam control element is observed, different images can be viewed depending on an observation angle. Specifically, to provide only lateral (horizontal) parallaxes, a slit array or a lenticular sheet (lens array, cylindrical lens array) is used. To also provide vertical parallaxes, a pinhole array or a lens array is used.

The scheme using the parallax barrier is further classified into a binocular scheme, a multiview scheme, a super multiview scheme (the multiview scheme under super multiview conditions), and integral photography (hereinafter also referred to as IP). The basic principle of these schemes is substantially the same as that invented about 100 years ago and used for three-dimensional photography.

The IP scheme is characterized by offering a high degree of freedom for the visual point position, allowing the observer to three-dimensionally view images easily and comfortably. As described in SID04 Digest 1438 (2004), the one-dimensional IP scheme using only the horizontal parallaxes and not the vertical parallaxes allows a display device with a high resolution to be relatively easily implemented. In contrast, with the binocular scheme or the multiview scheme, the range of the visual point position at which images can be three-dimensionally viewed, the viewing zone, is disadvantageously narrow, making it difficult to see the images. However, a three-dimensional image display device adopting the binocular scheme or the multiview scheme advantageously has the simplest configuration and allows display images to be easily created.

With such a direct-viewing auto-stereoscopic three-dimensional image display device using a slit array or a lenticular sheet, the periodic structure of the apertures in the light beam control element may disadvantageously interfere optically with the periodic structure of pixels in the display panel to cause moire or color moire. As a measure against this problem, a method for obliquely inclining the direction in which the apertures extend, for example, a slanted lens, is known from WO99/05559 and JPA Publication 2005-258421. With the oblique lens, the horizontal parallaxes are assigned to sub-pixels arranged in the vertical direction, advantageously enabling an increase in the number of effective parallaxes.

JPA Publication 2005-258421 describes a type with an inclination atan (1/n) (n = 4, 5) which is very effective for preventing possible moire and increasing the number of effective parallaxes on the basis of the vertical assignment of the parallaxes. With this type, when the number of parallaxes is defined as $n^2$, vertical resolution is equal to horizontal resolution, enhancing the periodicity and regularity of parallax images. This advantageously facilitates an image converting process.

However, the oblique installation of the apertures in the light beam control element may disadvantageously cause vertical lines in a three-dimensional image to be shown jagged, significantly degrading the quality of character display. Further, as described in SID04 Digest 1438 (2004) and its cited documents, an object located at a pop position or a depth position with respect to the display surface offers a lower horizontal resolution than an object located at the position of the display surface. However, the vertical resolution of the former is not lower than that of the latter. Consequently, the entire vertical and horizontal resolutions are not balanced, degrading the quality of images. Another problem is that if the color arrangement for three-dimensional display does not constitute horizontal stripes, the distribution of colors is uneven.

As described above, the problems with the conventional three-dimensional image display device with the obliquely installed light beam control element are that the vertical lines are shown jagged, degrading the quality of character display and that the object located at the pop or depth position has only its horizontal resolution reduced, degrading the quality of images.

According to an aspect of the present invention, there is provided a three-dimensional image display device comprising:

a display section having pixels arranged in a matrix and each comprising three color component sub-pixels arranged in vertical stripes, the display section displaying an array of elemental images at a certain horizontal pitch Pe, parallax component images being assigned in the respective elemental images to display a three-dimensional image, an average value of the horizontal pitch Pe of the elemental images being specified to be equal to or greater than natural number m times as large as the pixel horizontal pitch Ph (m < n, and n = 3, 4, or 5) ; and

a light beam control element arranged in front of the display section and having optical apertures arranged at a certain horizontal pitch Ps in a substantially horizontal direction and extending linearly in a direction inclined at an angle atan (1/n) to a direction of pixel columns, the horizontal pitch Ps of the light beam control element being specified to be equal to or smaller than natural number m times as large as the pixel horizontal pitch Ph.

According to another aspect of the present invention, there is also provided a method for displaying a three-dimensional image, the method using a three-dimensional display device comprising:

a display section having pixels arranged in a matrix and each comprising three color component sub-pixels arranged in vertical stripes, the display section displaying a group of elemental images at a certain horizontal pitch Pe, parallax component images being assigned in the respective elemental images to display a three-dimensional image, an average value of the horizontal pitch Pe of the elemental images being specified to be equal to or greater than natural number m times as large as the pixel horizontal pitch Ph (m<n, and n = 3, 4, or 5); and
a light beam control element arranged in front of the display section and having optical apertures arranged at a certain horizontal pitch Ps in a substantially horizontal direction and extending linearly in a direction inclined at an angle atan (1/n) to a direction of pixel columns, the horizontal pitch Ps of the light beam control element being specified to be equal to or smaller than natural number m times as large as the pixel horizontal pitch Ph, to display the elemental images so as to allow an observer to perceive a three-dimensional image within a viewing zone, the method comprising:

preparing a combined parallax image obtained by combining at least one parallax component image of n × m parallax component images which corresponds to an integration of pixels generating a group of substantially parallel light rays in the same parallax direction within the viewing zone, the combined parallax component images being in a relationship that the parallax component images correspond to (n × m)-th adjacent parallax directions, the combined parallax image having substantially the same numbers of vertical pixels and horizontal pixels and offering a horizontal resolution higher than a vertical resolution; and
converting the combined parallax image into a parallax interleaved image in which the element images are arranged and displaying the parallax interleaved image in the display section so that the observer perceives the three-dimensional image.

According to yet another aspect of the present invention, there is also provided a structure of three-dimensional image data, the three-dimensional image data being supplied to a three-dimensional display device to display the element images so as to allow an observer to perceive a three-dimensional image within a viewing zone, the three-dimensional display device comprising:

a display section having pixels arranged in a matrix and each comprising three color component sub-pixels arranged in vertical stripes, the display section displaying a group of elemental images at a certain horizontal pitch Pe, parallax component images being assigned in the respective elementsal images to display a three-dimensional image, an average value of the horizontal pitch Pe of the elemental images being specified to be equal to or greater than natural number m times as large as the pixel horizontal pitch Ph (m < n, and n = 3, 4, or 5); and
a light beam control element installed opposite the display section and having optical apertures arranged at a certain horizontal pitch Ps in a substantially horizontal direction and extending linearly in a direction inclined at an angle atan (1/n) to a direction of pixel columns, the horizontal pitch Ps of the light beam control element being specified to be equal to or smaller than natural number m times as large as the pixel horizontal pitch Ph;
the structure of three-dimensional image data has a combined parallax image which is converted into a parallax interleaved image in which the elemental images are arranged, the combined parallax image obtained by combining at least one parallax component image of n × m parallax component images which corresponds to an integration of pixel images generating a group of substantially parallel light rays in the same parallax direction within the viewing zone, the combined parallax component images being in a relationship that the parallax component images correspond to (n × m)-th adjacent parallax directions, the combined parallax image having substantially the same numbers of vertical pixels and horizontal pixels and offering a horizontal resolution higher than a vertical resolution.

The invention can be more fully understood from the following detailed description when taken in conjunction with the accompanying drawings, in which:

FIG. 1 is a perspective view schematically showing a three-dimensional image display device in accordance with an embodiment;

FIGS. 2A and 2B are perspective views schematically showing a light beam control element shown in FIG. 1;

FIGS. 3A to 3C are schematic diagrams showing the relationship among the average horizontal pitch Pe of elemental images, the horizontal pitch Ps of a parallax barrier, a parallax barrier gap d, an assumed visual distance L, and a viewing zone width W;

FIGS. 4A, 4B, and 4C are diagrams illustrating a method for configuring a parallax component image and a parallax interleaved image on the basis of a one-dimensional IP scheme having the condition that a set of parallel light rays is provided, in accordance with an embodiment;

FIGS. 5A to 5C are plan views showing the shape of effective pixels for three-dimensional display each composed of a group of pixels in an elemental image display section, the effective pixel being used for three-dimensional image display devices or image display methods for the devices in accordance with a comparative example and an embodiment;

FIGS. 6A and 6B are plan views showing the shape of effective pixels for three-dimensional display each composed of a group of pixels in the elemental image display section, the effective pixel being used for three-dimensional image display devices or image display methods for the devices in accordance with a comparative example and an embodiment;

FIG. 7 is a perspective view schematically showing the configuration of a part of a three-dimensional image display device in accordance with an embodiment;

FIG. 8 is a perspective view schematically showing the configuration of a part of a three-dimensional image display device in accordance with an embodiment;

FIG. 9 is a perspective view schematically showing the configuration of a part of a three-dimensional image display device in accordance with an embodiment;

FIG. 10 is a plan view schematically showing parallax component images in a three-dimensional image data structure in accordance with an embodiment;

FIG. 11 is a plan view showing the arrangement of a combined parallax image having the same numbers of vertical pixels and horizontal pixels in the three-dimensional image data structure in accordance with the embodiment;

FIG. 12 is a plan view schematically showing the form of the entirely combined parallax image in the three-dimensional image data structure in accordance with the embodiment;

FIG. 13 is a table showing an example of the assignment of parallax images in a three-dimensional image display device in accordance with an embodiment;

FIG. 14A is a diagram schematically illustrating a process of converting three-dimensional image data in the form of the entirely combined parallax image as shown in FIG. 12 into a parallax interleaved image (elemental image array);

FIG. 14B is a diagram schematically illustrating a process of converting three-dimensional image data in the form of the entirely combined parallax image as shown in FIG. 12 into a parallax interleaved image (elemental image array);

FIG. 14C is a diagram schematically illustrating a process of converting three-dimensional image data in the form of the entirely combined parallax image as shown in FIG. 12 into a parallax interleaved image (elemental image array);

FIG. 14D is a diagram schematically illustrating a process of converting three-dimensional image data in the form of the entirely combined parallax image as shown in FIG. 12 into a parallax interleaved image (elemental image array);

FIG. 14E is a diagram schematically illustrating a process of converting three-dimensional image data in the form of the entirely combined parallax image as shown in FIG. 12 into a parallax interleaved image (elemental image array);

FIG. 15 is a plan view showing an example of a group of parallax component images created by a three-dimensional image display device and a method for displaying a three-dimensional image in accordance with an embodiment;

FIG. 16 is a plan view showing an example of a group of parallax component images created by the three-dimensional image display device and the method for displaying the three-dimensional image in accordance with the embodiment;

FIG. 17 is a plan view showing an example of a parallax interleaved image created by the three-dimensional image display device and the method for displaying the three-dimensional image in accordance with the embodiment;

FIG. 18 is a table showing comparison between the display performance of a three-dimensional image display device in accordance with an embodiment and the display performance of a three-dimensional image display device in a comparative example; and

FIG. 19 is a table showing a detailed comparison between the display performance of the three-dimensional image display device in accordance with the embodiment and the display performance of the three-dimensional image display device in the comparative example, for n = 4, 5.

With reference to the drawings, a detailed description will be given of a three-dimensional image display device, a method for displaying a three-dimensional image, and a structure of three-dimensional image data.

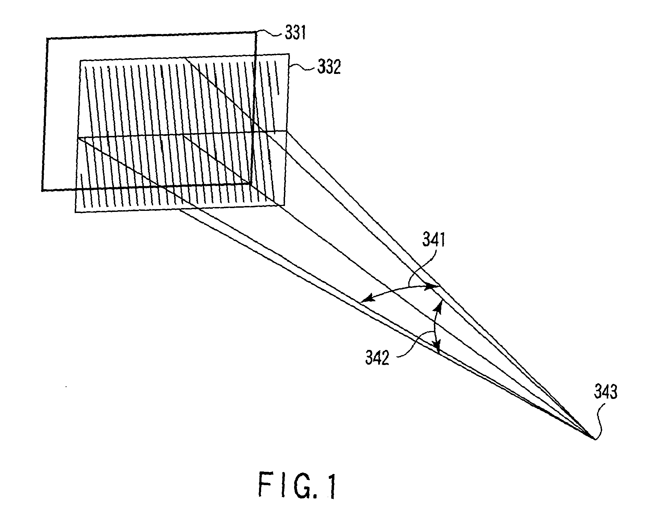

First, with reference to FIGS. 1 to 4, description will be given of the arrangement of parallax images in accordance with a one-dimensional IP scheme and the display of a three-dimensional image based on the arrangement. Here, the one-dimensional IP scheme is a scheme according to which a three-dimensional image is displayed by showing an image with parallaxes in one dimension, normally in a horizontal direction, while showing an image with no parallax in a vertical direction.

Either in the display of a three-dimensional image based on the IP scheme or in the display of a three-dimensional image based on the multiview scheme, visual distance is normally finite. Consequently, a display image is created so that a perspective projection image is actually visible at that visual distance.

FIG. 1 is a perspective view schematically showing the entire three-dimensional display device. A display section 331 in which elemental images are displayed has pixels arranged in a matrix and is composed of a high-definition liquid crystal panel module having a vertical stripe color filter arrangement. The display section 331 may also be a plasma display panel, an organic EL display panel, or a charge emission display panel provided that the display section 331 has a vertical stripe color arrangement with pixels arranged in a matrix. The type of the display device may be any of the display panels. The display section 331 has pixels arranged in a matrix at a pixel pitch Ph in the horizontal direction.

As shown in FIG. 1, a light beam control element 332 is provided opposite the display section 331. The light beam control element 332 is composed of a lenticular sheet 334 or a slit array 333. The light beam control element 332 has linearly extending optical apertures arranged in a substantially horizontal direction.

With the three-dimensional image display device configured as described above, when a position at which observer observes the three-dimensional image display device is assumed to be near a position in an assumed visual distance plane 343, a three-dimensional image can be observed near a front surface and a rear surface of the display section 331 within the ranges of a horizontal angle of view 341 and a vertical angle of view 342. That is, parallax component images (multi-view point images) in which respective elemental images are divisively arranged are displayed on pixels in the display section 331 corresponding to optical apertures. Light beams from the elemental images are controllably or regulatorily directed toward the observer, contributing to forming a three-dimensional image displayed between the light beam control element 332 and the observer or behind the display section 331.

Here, if the pixels arranged in a matrix in the display section 331 are arranged at a pixel horizontal pitch Ph in a horizontal direction, the elemental images are arranged at a certain pitch. The average horizontal pitch Pe of the elemental images is specified to be slightly greater than natural number m times as large as the pixel horizontal pitch Ph. As described below, the natural number m is set to be smaller than n (m < n), n ≥ 3, and n is preferably 4 or 5.

Both the IP scheme and the multiview scheme specify the elemental images corresponding to the optical apertures in the surface of the display section. In accordance with the IP scheme, unlike the multiview scheme, parallel light rays are emitted from the optical apertures toward the viewing zone to form a three-dimensional image within the viewing zone. In both the IP scheme and the multiview scheme, light beams emitted from the elemental images corresponding to the optical apertures are regulated by the optical apertures; the light beams are divergently directed to the viewing zone. However, in the IP scheme, when attention is paid to one light beam directed from one optical aperture toward a certain direction, a plurality of light beams parallel to this light beam are similarly emitted from other optical apertures. In contrast, in the multiview scheme, the light beams from the optical apertures are focused on at least two focusing points on the assumed visual distance plane. In the multiview scheme, the three-dimensional image can be observed as long as the observer's eyes are located at the focusing points. However, the three-dimensional image cannot be observed when the eyes are off the focusing points. In contrast, in the IP scheme, as long as the observer is located within the viewing zone, parallax component images corresponding to the observer's position are transmitted to the observer through the light beams from the optical apertures. Thus, a three-dimensional image as a collection of the parallax component images is perceived by the observer. Each elemental image is composed of divisively arranged parallax component images as described below. The light beams from the elemental images are controlled by the corresponding optical apertures so as to travel toward a predetermined direction, providing parallaxes to the observer within the viewing zone. The display section 331 displays an array of elemental images, and the collection of parallax component images is incident on the observer's eyes in accordance with the position of the observer within the viewing zone. As a result, the observer can perceive the three-dimensional image.

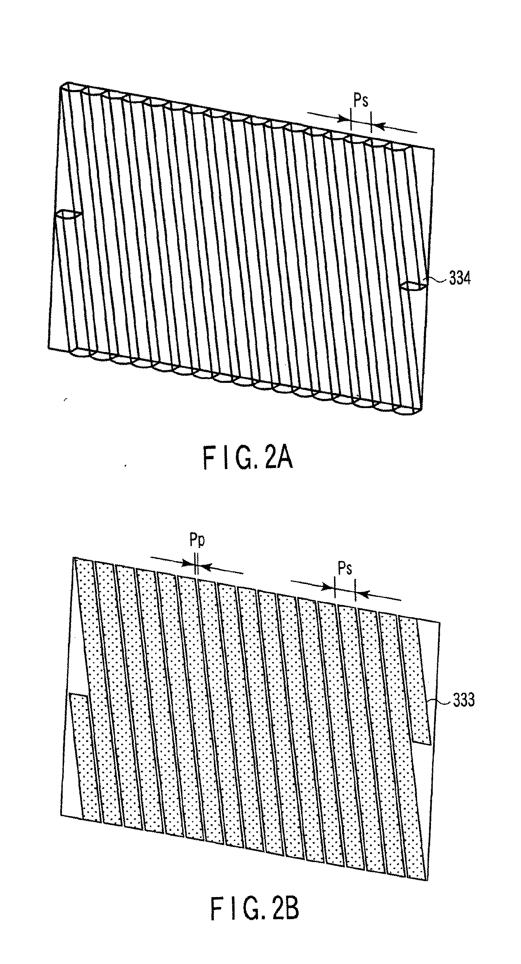

FIG. 2A is a perspective view schematically showing a lenticular sheet 334 serving as the light beam control element 332. FIG. 2B is a perspective view schematically showing a slit array serving as the light beam control element 332. The horizontal pitch Ps is set along a direction coinciding with the direction (horizontal direction) of pixel rows in the display section. The horizontal pitch Ps is set at a value different from a lens width or a slit interval (a value for a period direction). The light beam control element 332 has the optical apertures (corresponding to cylindrical lenses for the lenticular sheet 332 or to slits for the slit array 333) arranged at the horizontal pitch Ps and extending linearly in a direction inclined at an angle atan (1/n) to the direction of pixel columns in the display section 331. As described below, n is a natural number, n ≥ 3, and n is preferably specified to be 4 or 5.

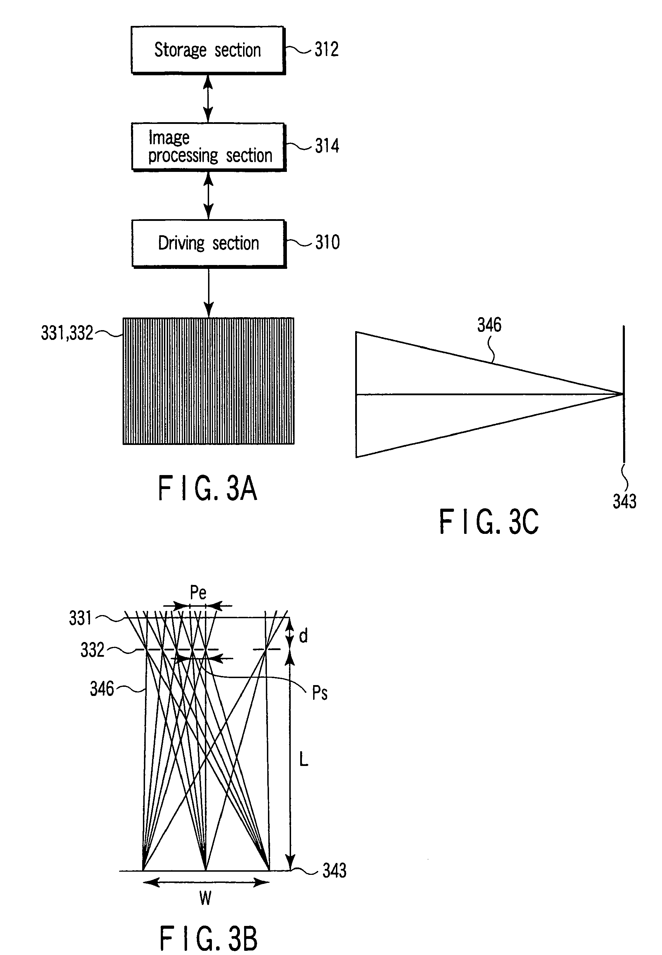

FIGS. 3A to 3C are developments schematically showing the ranges in a vertical plane and a horizontal plane to which light beams are directed, based on the display section of the three-dimensional image display device shown in FIG. 1. FIG. 3A is a front view showing the elemental image display section 331 and the light beam control element 332. FIG. 3B is a plan view showing the arrangement of images in the three-dimensional image display device. FIG. 3C is a side view showing the vertical angle of view in the three-dimensional image display device.

As shown in FIGS. 1, 2A, 2B, and 3A to 3C, the three-dimensional image display device comprises the display section 331 such as a liquid crystal display panel and the light beam control element 332 having the optical apertures. In this case, by way of example, the number of pixels in the display section 331 is 1,400 in the horizontal direction and 1,050 in the vertical direction if the numbers are counted on the basis of minimum unit pixels each constituting a square. The minimum unit pixel includes three sub-pixels in red (R), green (G), and blue (B). The three sub-pixels in red (R), green (G), and blue (B) are arranged in stripes to form a vertical stripe color arrangement.

As shown in FIG. 3B, an assumed visual distance L is the distance between the light beam control element 332 and the assumed visual distance plane 343 and is normally specified as a design reference distance; the observer is assumed to observe images at the distance L. The horizontal pitch Pe of the elemental images is determined by setting the assumed visual distance L, the horizontal pitch Ps of the optical apertures in the light beam control element 332, and the gap d between the light beam control element 332 and the pixel surface of the display section 331. That is, the horizontal pitch Pe of the elemental images is determined to be the intervals at which the centers of the optical apertures (the aperture centers or the principal points of a lens) are projected on the display surface of the display section 331 from one point on the assumed visual distance plane 343. Reference numeral 343 denotes a line connecting a visual point position 343 and the center of each aperture (or the principal point of the lens). A viewing zone width W is specified on condition that the elemental images distributed on the surface of the display section 331 do not overlap one another. Here, the viewing zone width W is the width of the viewing zone in the assumed visual distance plane 343. The viewing zone is defined as the range within which the observer can observe normal three-dimensional images. As long as the observer is located within the viewing zone, the observer can observe normal three-dimensional images.

In the one-dimensional IP scheme (parallel-beam one-dimensional IP scheme) having the condition that substantially parallel light rays are emitted from the optical apertures in the light beam control element 332, the average value of the horizontal pitch Pe of the elemental images is specified to be slightly greater than natural number m times as large as the pixel horizontal pitch Ph. Further, the horizontal pitch Ps of the light beam control element 332 is specified to be equal to the value m times as large as the pixel horizontal pitch Ph. The multiview scheme specifies that the horizontal pitch Pe of the elemental images is equal to the value m times as large as the pixel horizontal pitch Ph and that the horizontal pitch Ps of the light beam control element 332 is slightly smaller than the value m times as large as the pixel horizontal pitch Ph ($m < n$). In a design with the assumed visual distance at infinity, the parallel-beam one-dimensional IP scheme matches the multiview scheme, that is, $Ph \times m = Pe = Ps$.

As shown in FIG. 3, image data to be displayed as a three-dimensional image is stored in a storage section 312. The storage section 312 supplies image data to an image processing section 314, which converts the data into a frame image. The prepared image data is normally a combined parallax image suitable for compression, which is compressed and stored in the storage section 312. As described below, the image processing section 314 decompresses the compressed image data into the combined parallax image and then converts the combined parallax image into a parallax interleaved image. The image processing section 314 then outputs a frame image. The image processing section 314 supplies the frame image a driving section 310, which then supplies a display signal to the display section 331. In response to the display signal, the display section 331 displays an elemental image array having the elemental image horizontal average pitch Pe as a parallax interleaved image.

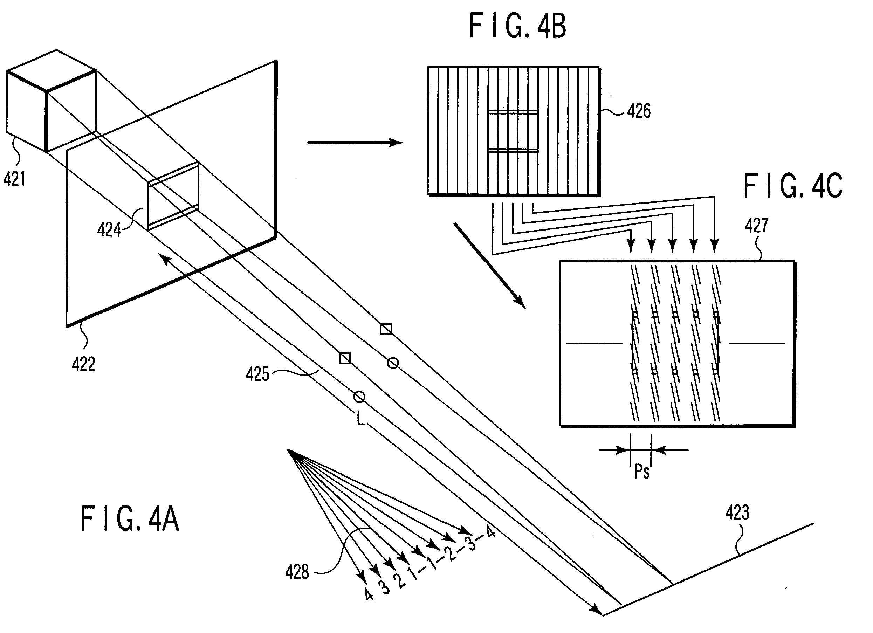

FIGS. 4A to 4C shows a method for generating a parallax component image (multi-view point image) and a method for configuring a parallax interleaved image, in accordance with the one-dimensional IP scheme having the condition that substantially parallel beams are emitted from the optical apertures in a horizontal surface.

An image of an object (subject) 421 to be displayed is projected and formed on a projection plane 422 having the same positional relationship as that of a surface in which the light beam control element 332 of the three-dimensional image display device is actually placed. In accordance with the parallel-beam one-dimensional IP scheme, a projection image is acquired by perspective projection in the vertical direction and by orthographic projection in the horizontal direction, as described in SID04 Digest 1438 (2004). As shown in FIG. 4A, a projection center line 423 parallel to the projection plane 422 is specified in the assumed visual distance plane 343, located in front of the projection plane 422 (in the center in the vertical direction). A projection image is projected toward the projection center line 423 along projection lines 425.

The projection lines 425 are specified so as not to cross one another in the horizontal direction, while crossing one another at the projection center line 423 in the vertical direction. Projection directions -4, -3, -2, -1, 1, 2, 3, and 4 are not arranged at equal angles in the horizontal plane but are specified to lie at equal intervals on the assumed visual distance plane 343 (that is, the projection center line 423). This corresponds to cameras directed in a fixed orientation and translated at equal intervals or arranged at equal intervals to photograph the subject. With a multiview projection method, the subject is perspectively projected toward the projection center point (the intersecting point between the projection center line 423 and each projection direction).

FIG. 4A shows how an image of the object (subject) 421 is projected in the projection direction 1. A parallax component image 426 formed on the projection plane 422 by this projection are first divided into pixel columns as shown in FIG. 4B. Then, columns of the parallax component image 426 are separated from one another and arranged on the parallax interleaved image 427 so that the distance between the adjacent the column is equal to the horizontal pitch Ps of the light beam control element 332. In the arrangement of the parallax component image 426, one column on the parallax component image 426 is located substantially along the vertical direction on the parallax interleaved image 427. However, the optical apertures extend obliquely to the vertical direction, and pixels in the column are arranged and distributed in association with the respective optical apertures. As a result, each portion of the same column on the parallax component image 426 is located obliquely to the vertical direction as shown in FIG. 4C.

The parallax component images 426 in the projection directions -4, -3, -2, -1, 1, 2, 3, and 4 are interleaved on the parallax interleaved image 427 to form an elemental image array. In the embodiment of the present invention, the parallax component image 426 has a horizontal resolution set higher than a vertical direction. Thus, in the projection stage, the horizontal resolution may be set higher. The horizontal resolution may be set higher than the vertical direction by resizing an image projected at an aspect ratio of 1 so as to change the aspect ratio.

FIG. 4A shows the eight projection directions -4, -3, -2, -1, 1, 2, 3, and 4 by way of example. However, the number of projection directions may be increased depending on the assumed visual distance L.

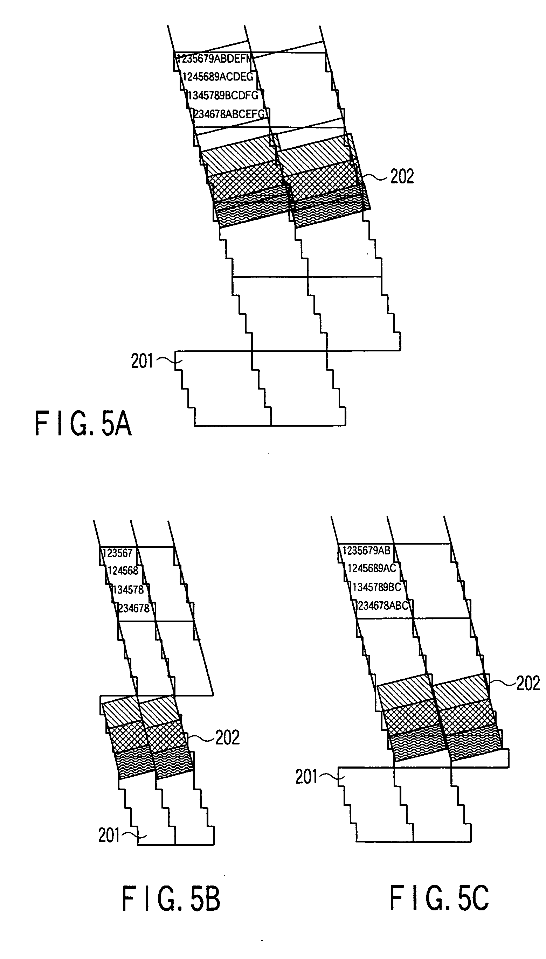

FIGS. 5A to 5C show examples of the shapes of each elemental image and each effective pixel for three-dimensional display in three-dimensional image display devices and image display methods for the devices in accordance with an embodiment of the present invention and a comparative example. Here, the effective pixel for three-dimensional display is a minimum unit corresponding to the resolution for three-dimensional display. Each elemental image is made of a large number of effective pixels for three-dimensional display arranged in the vertical direction. The effective pixel for three-dimensional display is composed of a group of sub-pixels in the display section 331. The sub-pixel means each of a red portion, a green portion, and a blue potion (RGB, the minimum units that can be independently driven) constituting each pixel.

FIG. 5A shows the shapes of elemental images and effective pixels for three-dimensional display in a comparative example (lens angle atan (1/4), 16 parallaxes (n = 4, m = 4)) described in Jpn. Pat. Appln. KOKAI Publication No. 2005-258421. FIG. 5B shows the shapes of elemental images and effective pixels for three-dimensional display in an example of the present invention (lens angle atan (1/4), 8 parallaxes (n = 4, m = 2)). FIG. 5C shows the shapes of elemental images and effective pixels for three-dimensional display in an example of the present invention (lens angle atan (1/4), 12 parallaxes (n = 4, m = 3)). In this case, the lens angle atan (1/4) is defined to be an angle to a perpendicular.

Each rhombic area enclosed by solid lines is an effective pixel for three-dimensional display. In FIG. 5A, the effective pixel for three-dimensional display is composed of 48 sub-pixels in 16 columns and 4 rows. In FIG. 5B, the effective pixel for three-dimensional display is composed of 24 sub-pixels in 8 columns and 4 rows. In FIG. 5C, the effective pixel for three-dimensional display is composed of 36 sub-pixels in 12 columns and 4 rows. Oblique dashed lines in the vertical direction show boundaries between elemental images. The slit array 333 or the lenticular sheet 334 is installed so that the optical apertures extend in the same direction as that of the oblique dashed lines and so that each aperture is located substantially midway between the oblique dashed lines. That is, each optical aperture is located at the lens angle atan (1/n) or slit angle atan (1/n) to the perpendicular. Here, n denotes a natural number, n ≥ 3, and n is preferably 4 or 5.

Each pixel in the display section 331 is formed to be a square made of three sub-pixels in red, green, and blue (RGB) arranged in the horizontal direction. However, the elemental image boundaries are defined in sub-pixel units in association with the direction of the optical apertures. Numbers in each effective pixel for three-dimensional display show an example of parallax numbers assigned to that pixel. Each piece of parallax information is assigned to the three sub-pixels in red, green, and blue (RGB) in an oblique direction (the same direction as that of the apertures in the light beam control element 332). Data on an image for the rightmost visual point contained in a multi-view point image is located at a sub-pixel with a parallax number 1, data on an image for the visual point on the left of the rightmost one contained in the multi-view point image is located at a sub-pixel with a parallax number 2, and so on. Data on an image for the leftmost visual point contained in the multi-view point image is located at a sub-pixel with the rightmost parallax number in the effective pixel for three-dimensional display (in FIGS. 5A, 5B, and 5C, parallax information numbers G, 8, and C, respectively). Instead of providing parallax information to the pixel made of the three sub-pixels in red, green, and blue (RGB), a single piece of parallax information may be assigned to each sub-pixel, though color information on a three-dimensional image to be displayed may be degraded.

In the conventional example shown in FIG. 5A, the vertical period of each effective pixel for three-dimensional display corresponds to four effective pixels (16 pixels in the display section 331). If a vertical line is displayed as a three-dimensional image, the period appears as jag, degrading the display quality of the corresponding character. In the examples shown in FIGS. 5B and 5C, the vertical period of each effective pixel for three-dimensional display corresponds to two and three effective pixels (8 and 12 pixels in the display section 331), respectively. If a vertical line is displayed in a three-dimensional image, the period serves to reduce the jag. Further, in FIG. 5A, the effective pixel for three-dimensional display is shaped like a square. Thus, the vertical resolution and the horizontal resolution are thus the same on the display surface. A display image of an object located at a pop position or a depth position has a reduced resolution.

In contrast, in FIGS. 5B and 5C, each effective pixel for three-dimensional display is vertically long and thus offers a high horizontal resolution on the display surface. For the image of the object located at the pop or depth position, the vertical resolution is equivalent to the horizontal resolution. The hatched portions shown in FIGS. 5A to 5C shows a color arrangement for three-dimensional display. In all of FIGS. 5A, 5B, and 5C, the color arrangement is of a horizontal stripe type. Consequently, even with a decrease in the horizontal display resolution of the image of the object located at the pop or depth position, the color arrangement itself remains unchanged. In contrast, if the color arrangement in each effective pixel for three-dimensional display is of a delta type, the reduced horizontal resolution may disadvantageously make the distribution of colors uneven.

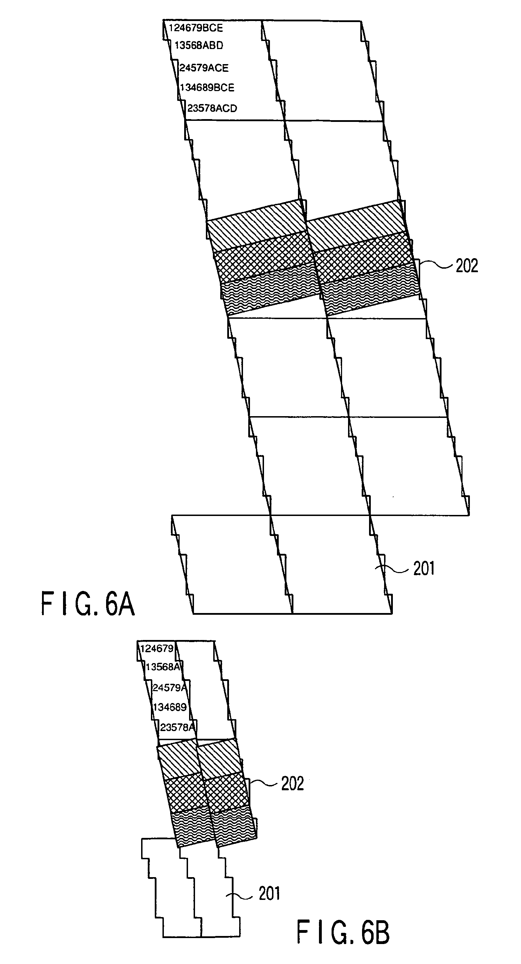

FIGS. 6A and 6B shows examples of the shapes of elemental images and effective pixels for three-dimensional display each of which are composed of a group of sub-pixels in the elemental image display section 331, the images and pixels being used for three-dimensional image display devices or image display methods for the devices in accordance with another embodiment of the present invention and a comparative example. FIG. 6A shows the shapes of elemental images and effective pixels for three-dimensional display in a comparative example (lens angle atan (1/5), 25 parallaxes (n = 5, m = 5)) described in JPA Publication 2005-258421. FIG. 6B shows the shapes of elemental images and effective pixels for three-dimensional display in an example of the present invention (lens angle atan (1/5), 10 parallaxes (n = 5, m = 2)). Each area enclosed by solid lines corresponds to an effective pixel for three-dimensional display. Each effective pixel for three-dimensional display shown in FIG. 6A is composed of 75 sub-pixels in 15 columns and 5 rows. Each effective pixel for three-dimensional display shown in FIG. 6B is composed of 30 sub-pixels in 6 columns and 5 rows. As in the case of the example shown in FIG. 5B, the three-dimensional image display device in accordance with the present invention is more excellent than the comparative example in the quality of character display and the balance of the display resolutions of an image located at a pop or depth position.

In the multiview scheme, the average value Pe of the elemental image pitch is equal to m times as large as the pixel width Ph of the elemental image display section 331. Further, the horizontal pitch Ps of the light beam control element 332 is smaller than m times as large as the pixel width Ph of the elemental image display section 331. This allows the effective pixels for three-dimensional display shown in FIGS. 5A to 5C or 6A and 6B to be formed all over the surface of the display section 331. In the one-dimensional IP scheme, the average value Pe of the elemental image pitch is greater than m times as large as the pixel width Ph of the elemental image display section 331. Further, the horizontal pitch Ps of the light beam control element 332 is equal to m times as large as the pixel width Ph of the elemental image display section 331. Consequently, as shown in JPA Publication 2005-258421, the shape of the effective pixel for three-dimensional display depends on the lateral position of the display section 331.

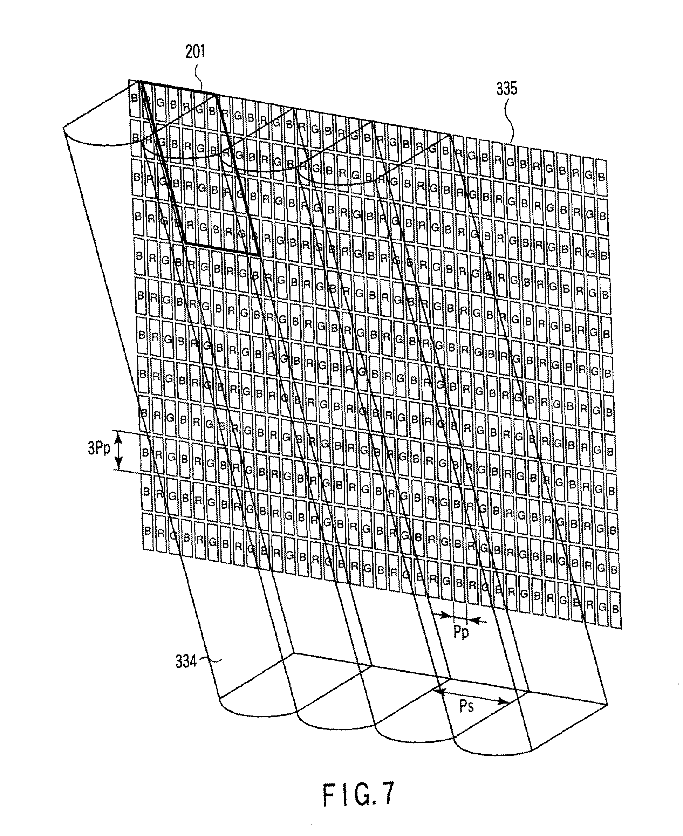

FIG. 7 is a perspective view schematically showing the structure of a part of three-dimensional image display device in accordance with the present invention. In the three-dimensional image display device shown in FIG. 7, the lenticular sheet 334 serving as the parallax barrier 332 and comprising cylindrical lenses having obliquely extending (angle atan (1/4)) optical apertures is located in front of the planar display section 331 such as a liquid crystal panel. As shown in FIG. 7, in the display surface of the display device, sub-pixels 335 with an aspect ratio of 3:1 are arranged in a matrix, that is, linearly in the horizontal direction and in the vertical direction. Effective pixels for three-dimensional display 201 are arranged so that the sub-pixels 335 in red (R), green (G), and blue (B) are alternately arranged in the same row. This color arrangement is commonly called a vertical stripe arrangement. The elemental image display section 331 shown in FIG. 7 corresponds to the example in FIG. 5B, and the effective pixel for three-dimensional display 201 (shown by a black frame) is composed of the sub-pixels 34 in 6 columns and 4 rows. In this structure of the display section, the effective pixel for three-dimensional display is made of 24 sub-pixels. Consequently, assigning one parallax to the obliquely arranged three sub-pixels in R, G, and B enables the display of a three-dimensional image providing 8 parallaxes in the horizontal direction.

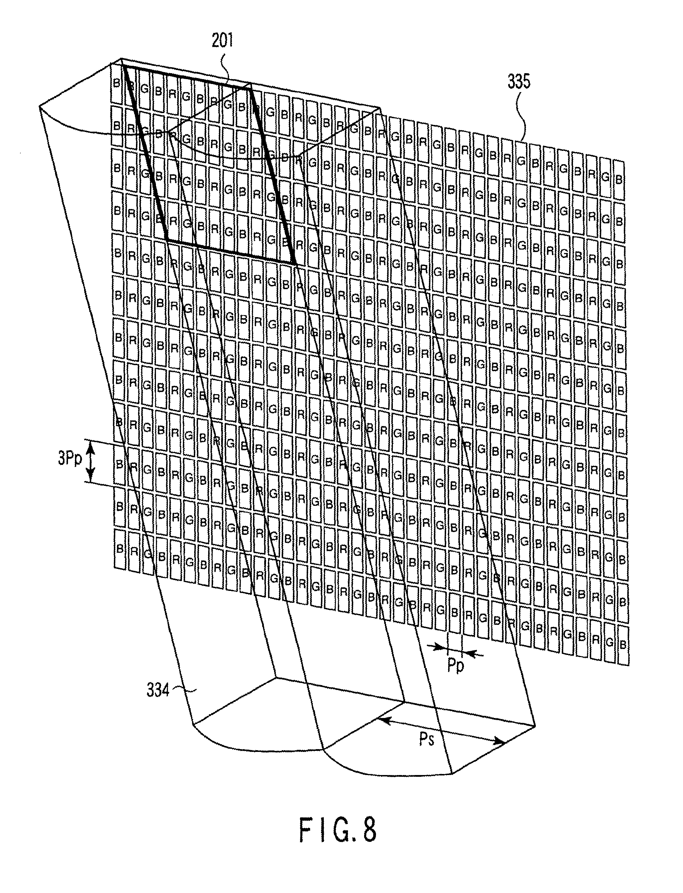

FIG. 8 is a perspective view schematically showing the structure of a part of three-dimensional image display device in another example of the present invention. In the three-dimensional image display device shown in FIG. 8, the lenticular sheet 334 serving as the parallax barrier 332 and comprising cylindrical lenses having obliquely extending (angle atan (1/4)) optical apertures is located in front of the planar display section 331 such as a liquid crystal panel. The elemental image display section 331 shown in FIG. 8 corresponds to the example in FIG. 5C, and the effective pixel for three-dimensional display 201 (shown by a black frame) is composed of the sub-pixels 34 in 9 columns and 4 rows. In this structure of the display section, the effective pixel for three-dimensional display is made of 36 sub-pixels. Consequently, assigning one parallax to the obliquely arranged three sub-pixels in R, G, and B enables the display of a three-dimensional image providing 12 parallaxes in the horizontal direction.

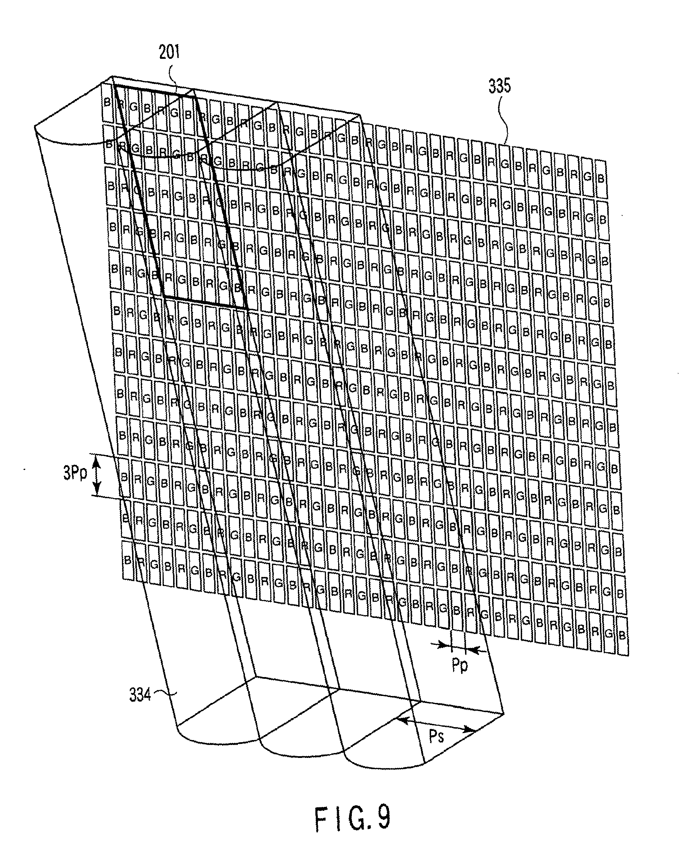

FIG. 9 is a perspective view schematically showing the structure of a part of three-dimensional image display device in yet another example of the present invention. In the three-dimensional image display device shown in FIG. 9, the lenticular sheet 334 serving as the parallax barrier 332 and comprising cylindrical lenses having obliquely extending (angle atan (1/5)) optical apertures is located in front of the planar display section 331 such as a liquid crystal panel. The elemental image display section 331 shown in FIG. 9 corresponds to the example in FIG. 6B, and the effective pixel for three-dimensional display 201 (shown by a black frame) is composed of the sub-pixels 34 in 6 columns and 5 rows.

In this structure of the display section, the effective pixel for three-dimensional display is made of 30 sub-pixels. Consequently, assigning one parallax to the obliquely arranged three sub-pixels in R, G, and B enables the display of a three-dimensional image providing 10 parallaxes in the horizontal direction.

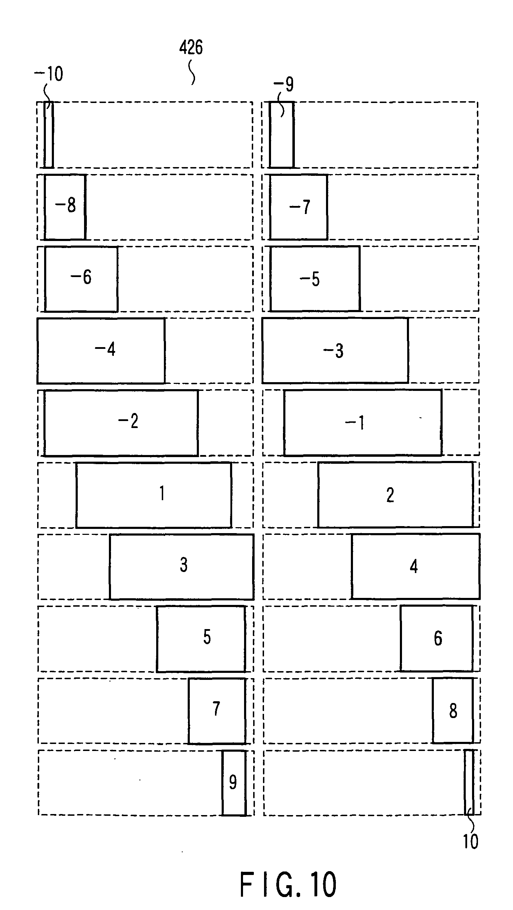

Now, with reference to FIGS. 10 to 14, description will be given of the structure of image data in a format suitable for compression into which a parallax interleaved image displayed in the display section 331 is converted.

The parallax component image 426 shown in FIG. 10 is taken separately from images taken within the common projection plane range, by a camera located at the assumed visual distance L from the projection plane 422 as shown in FIG. 4. Here, the projection plane 422 corresponds to a focus plane used to focus the camera on the subject 421. All the cameras are arranged parallel to one another and directed toward the projection plane 422. Parallax component images are obtained from an image displayed on the common projection plane. Accordingly, parallax component images are acquired by shift lens photographing or wide-angle photographing followed by clipping. For camera numbers (parallax direction numbers), if the number of parallaxes is even, positive and negative numbers except zero are provided symmetrically with respect to the center of the front surface of the projection plane 422. The parallax direction numbers correspond to the projection directions -4, -3, -2, -1, 1, 2, 3, and 4, described with reference to FIG. 4.

FIG. 10 shows parallax component images nos. -10 to +10. A part of each parallax component image which is not used to display a three-dimensional image is the range enclosed by dashed lines (that is, the entire parallax component image except for the range enclosed by solid lines), with only the range enclosed by solid lines used to display the three-dimensional image. That is, for a parallax component image taken by a camera located close to the center of the front surface of the projection plane 422, the range used for the displayed three-dimensional image occupies a larger area of the parallax component image. For a parallax component image taken by a camera located away from the center of the front surface of the projection plane 422 in either direction, the range used for the displayed three-dimensional image occupies a smaller area of the parallax component image.

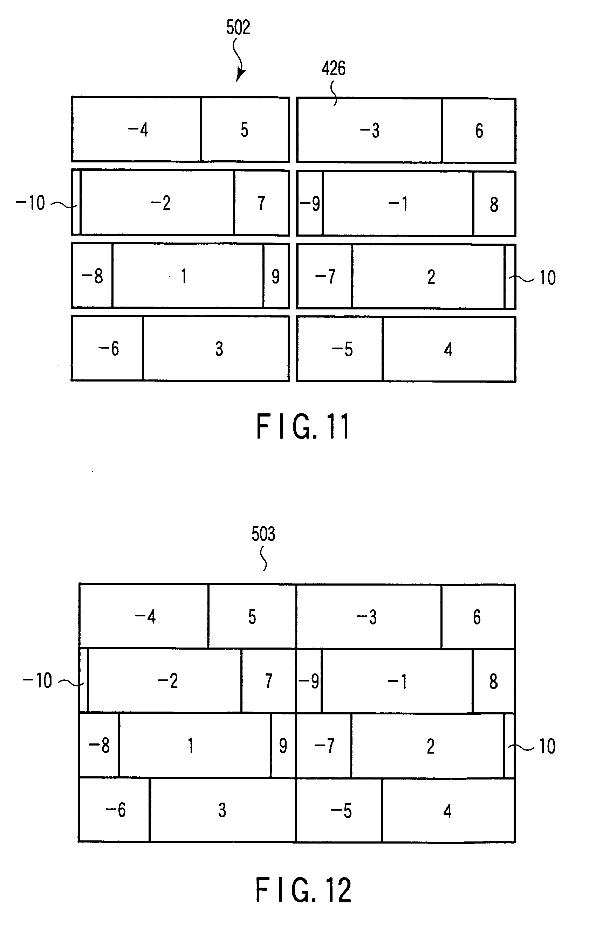

FIG. 11 shows a combined parallax image to which a method for recording a three-dimensional image in accordance with an embodiment of the present invention is applied. As described above with reference to FIG. 3, the combined parallax image 502 is compressively stored in the storage section 312. The data compressed by the image processing section 314 is decompressed into the format of the combined parallax image 502. FIG. 11 shows k (in this example, k = n × m = 8) combined parallax images 502 each of which has the same numbers of vertical pixels and horizontal pixels, which are suitable for recording of a three-dimensional image. Here, k corresponds to the number of parallaxes. Each combined parallax image 502 is composed of one of 20 images shown in FIG. 10 or a combination of several parallax component images 426 (+10 to +1, -1 to -10).

The k combined parallax image 502 has a data structure formatted so as to allow easy conversion into a single parallax interleaved image displayed in the display section 331. The combined parallax images 502 are distributed on the display section 331 by a divisive arrangement method similar to the divisive arrangement of a parallax component image described with reference to FIG. 4. That is, the sub-pixels of the combined parallax image 502 containing a camera image (#-4) corresponding to the right end of the viewing zone are arranged from the leftmost column of the parallax interleaved image up to the right end of the parallax interleaved image while being obliquely rearranged every 6 sub-pixels as shown in FIG. 4C. Then, the sub-pixels of the combined parallax image 502 containing the second camera image (#-3) from the right end of the viewing zone are arranged adjacent to and continuously with the pixels already arranged in the parallax interleaved image, up to the right end of the parallax synthesis image while being obliquely rearranged every 6 sub-pixels. The combined interleaved images containing the respective camera images are thus sequentially arranged. Finally, the sub-pixels of the combined parallax image 502 containing the second camera image (#4) corresponding to the left end of the viewing zone are arranged adjacent to and continuously with the pixels already arranged in the parallax interleaved image, up to the right end of the parallax interleaved image while being obliquely rearranged every 6 sub-pixels. In this arrangement, the images may be distributed to sub-pixels located outside the screen. Image information on the images distributed to the sub-pixels located outside the screen may be discarded.

In the above process, the eight combined parallax images can be handled by exactly the same process as that used for eight-view point images based on the multiview scheme and can be converted into a parallax interleaved image by exactly the same interleave process as that used for eight-view point images based on the multiview scheme. Here, the images are recorded in a storage medium in the form of the arrangement of the combined parallax image 502 shown in FIG. 11, or the arrangement of the combined parallax image 502 shown in FIG. 11 is subjected to intra-frame compression into one frame or similarly subjected to inter-frame compression by being correlated with the arrangement of another combined parallax image 502, corresponding to another frame.

The numbers (10 to 1, -1 to -10) in FIGS. 10 and 11 denote the numbers for the parallax component images 426 (same as the camera numbers). Thus, it should be noted that in the description below, a combination of the numbers (10 to 1, -1 to -10) for the parallax component images 426 is used to identify the combined parallax image 502. For example, in FIG. 11, the combined parallax image 502 located at the upper left end of FIG. 11 is identified as (-4, 5). The combined parallax image 502 located at the left end of the third stage in FIG. 11 is identified as (-8, 1, 9).

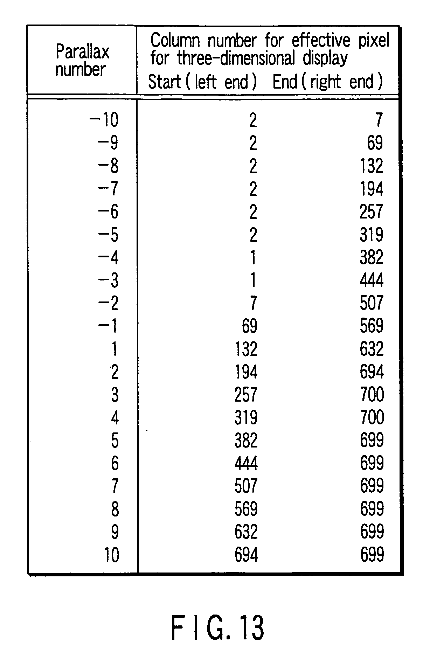

In the one-dimensional IP scheme in which parallel light rays are emitted in the horizontal direction, the light beam control element 332 (lenticular sheet) is located in front of the display panel, the light beam control element 332 extending linearly so that the optical apertures (the cylindrical lenses of the lenticular sheet) are arranged at a horizontal pitch equal to natural number times, for example, twice, as large as the pixel horizontal pitch Ph of the pixels arranged in the display surface (six times as large as that of the horizontal pitch of the sub-pixels). In the one-dimensional IP scheme, light beams from every six sub-pixels arranged in the horizontal direction of the display surface are directed parallel to one another toward the visual field area to reproduce the three-dimensional image. The number of parallax component images 426 obtained by integrating image data on a set of pixels constituting parallel light rays in the same parallax direction is, for example, greater than 8 (= 6 × 4 (rows)/3 (color components)) and is specified to be 20 in the embodiment. As shown in FIG. 10, the parallax component images 426 #-10 to #-1 and #+1 to #+10 have different numbers of pixels in the horizontal direction (available pixel range). For each of the 20 parallax component images 426 in total, the available pixel range in the corresponding camera image has such a size as shown in FIG. 10. Here, in FIG. 10, solid lines show the available pixel ranges of the parallax component images 426. Dashed lines indicate the size of each camera image (the numbers of vertical and horizontal pixels corresponding to the projection plane for photographing) equal to the display resolution for three-dimensional display. The numbers of vertical and horizontal pixels are specified to be 700 × 262 pixels (not sub-pixels). The parallax component images 426 have the same vertical pixel count but different horizontal pixel counts; specific values (the available pixel column range in the horizontal 700 pixels) for the horizontal pixel counts are shown in FIG. 13 (the pixels in the parallax component image correspond to effective pixels for 3D display). That is, as shown in FIG. 13, given that pixel numbers 1 to 700 are provided to the respective camera images from left to right, the camera image with the parallax number 10 uses the range from pixel column number 2 to pixel column number 7 as shown in FIG. 13. Further, as shown in FIG. 13, the camera image with the parallax number -3 uses the range from pixel column number 1 to pixel column number 444. Similarly, for the other parallax numbers, the ranges of pixel column numbers shown in FIG. 13 are used as parallax component images. The observer position (viewing zone) at the assumed visual distance L where the observer can observe the three-dimensional image corresponds to the width over which central 8 of the 20 cameras are located. The range of those of the parallel beams corresponding to the respective cameras which lie within the viewing zone corresponds to the available pixel range.

Combined parallax images 503 shown in FIG. 11 are obtained by combining the parallax component images 426 separated from the camera images shown in FIG. 10 so that the combined parallax images 502 have the same numbers of vertical and horizontal pixels. As is apparent from the comparison of the sizes (the numbers of vertical and horizontal pixels) of the parallax component images 426 shown in FIG. 10, the combination of one or several parallax component images corresponding to the eighth adjacent parallax directions enables conversion into eight combined parallax images 502 each having the same numbers of vertical and horizontal pixels. For example, the combined parallax image 502 shown in the upper left of FIG. 11 corresponds to a combination of the parallax component image nos. -4 and 5, which have parallax numbers differing by 8. The combined parallax image 502 shown in the upper right of FIG. 11 corresponds to a combination of the parallax component image nos. -3 and 6, which have parallax numbers differing by 8. The parallax component images 426 are combined together which are separated from the images taken with the camera numbers indicating distant positions corresponding to the eighth adjacent parallax directions. However, if the image has insignificant parallaxes as in the case where the subject is located close to the display surface, the combined parallax image exhibits high continuity. Accordingly, even if an irreversibly compressed combined parallax image is decompressed, the degradation of the image quality of the combined part is minimized. Some combined parallax images 502 corresponding to cameras located near the front of the display surface may each be composed of only one parallax component image 426. Each combined parallax image 502 has exactly the same numbers of vertical and horizontal pixels and can thus be processed in exactly the same manner as multiview data for a display device based on the multiview scheme.

FIG. 13 is a table showing the specific number of horizontal pixels (pixel column (not a sub-pixel column) range) in each parallax component image 426. The pixel column numbers for each parallax component image are the same as the pixel column numbers for the corresponding effective pixel for 3D display. As described in SID04 Digest 1438 (2004), this table is created by calculations using an elemental image average pitch (slightly greater than the width of 6 sub-pixels) determined from the assumed visual distance L. As is apparent from the table shown in FIG. 13, an image with the parallax number no. -10, identifying the parallax direction, has a size corresponding to only the pixel area from the 2nd to 7th of the horizontal 700 pixel columns in the camera taken images shown in FIG. 10 and also corresponding to the width of 6 pixels. The data corresponding to the width of 6 pixels is divided into columns and arranged in each of 6 sub-pixels over a predetermined sub-pixel column range for the parallax interleaved image. Three sub-pixels in R, G, and B horizontally arranged in the parallax component image are obliquely rearranged. Similarly, an image with the parallax number no. -9 has a size corresponding to only the pixel area from the 2nd to 69th of the horizontal 700 pixel columns and also corresponding to the width of 68 pixels. The data corresponding to the width of 68 pixels is divided into columns and arranged in each of 6 sub-pixels over a predetermined sub-pixel column range for the parallax interleaved image displayed on the display section 331. Three sub-pixels in R, G, and B are obliquely rearranged as shown in FIG. 4C. By way of example, the combined parallax image 502 is composed of a combination of the parallax nos. -10, -2, and 7. The total of the area widths (horizontal pixel count) based on the combination is 6 + 501 + 193 = 700. Another combined parallax image 502 shown in FIG. 11 is composed of a combination of the parallax nos. -6 and 3. The total of the area widths based on the combination is 256 + 444 = 700. Similarly, for all the other combinations, the total of the area widths is 700.

In the above description, for the parallel-beam one-dimensional IP scheme, it is correct for the design that each parallax component image 426 is obtained by perspective projection corresponding to the assumed visual distance L or a nearby visual distance in the vertical direction and by orthographic projection in the horizontal direction. However, the image may be obtained by perspective projection in both vertical and horizontal directions if the distortion of the three-dimensional image is insignificant.

FIG. 12 shows an example of a single total combined parallax image obtained by further combining the 8 combined parallax images 502 shown in FIG. 11. The total combined parallax image is obtained by linearly combining together the combined parallax images, containing the adjacent parallax directions, so that the combined parallax images lie adjacent to one another in the horizontal direction and then dividing the combination of the combined parallax images into 4 pieces, which are arranged in four stages. In this example, two combined images 502 containing those (nos. -4 and 4) of eight parallax directions close to the front of the display surface are arranged at the opposite ends (upper left and lower right) of the total combined parallax image. This form also corresponds to a structure suitably applicable to a process substantially similar to the process for multiview data for the multiview scheme-based display device.

The tile-like total combined parallax image has the same numbers of vertical and horizontal pixels as those of a parallax interleaved image displayed on the display surface during the display of a three-dimensional image. The same numbers of vertical and horizontal pixels as those of the parallax interleaved image, the final display image, enable compressive recording in a format meeting standards such as MPEG2. That is, when the tile-like total combined parallax image shown in FIG. 12 is prepared as a frame and a plurality of frames are used to reproduce a three-dimensionally visible motion picture, inter-frame compression and intra-frame compression are applicable. The lateral ends of each parallax component image 426 correspond to the ends of the screen or viewing zone for three-dimensional display. A parallax component image combined portion in each combined parallax image corresponds to the viewing zone end. The combined portion between combined parallax images corresponds to the screen end. The irreversible compression encodes every given block size. However, in most cases, the combined portion between the combined parallax images coincides with a block boundary. Further, the combined potion between the parallax component images within each combined parallax image often fails to coincide with the block boundary. However, at the viewing zone end (the boundary with the adjacent lobe), the three-dimensional image is inherently split and does not appear to be normal. Consequently, degraded image quality poses no problem. Therefore, even when the irreversibly compressed total combined parallax image is decompressed, it is possible to avoid the adverse effect of the image quality degradation at the combined portion on the three-dimensional image.

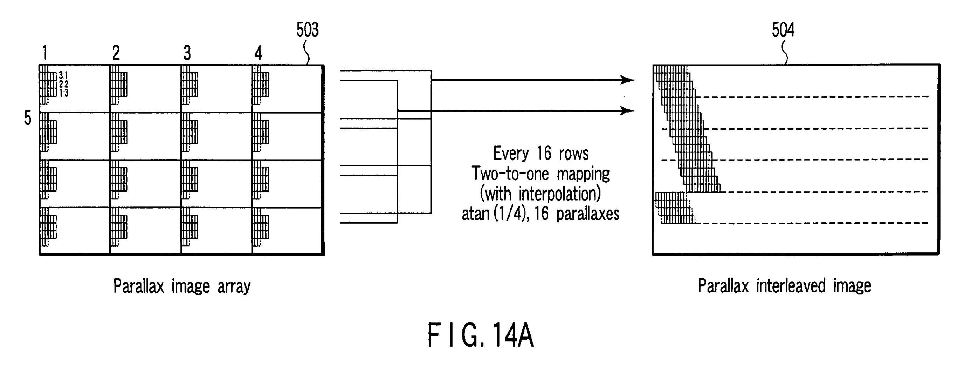

FIGS. 14A to 14E show a conversion from the total combined parallax image (parallax image array) 503, shown in FIG. 13, into the parallax interleaved image 504. In an optical system with optical apertures obliquely arranged, the horizontal position of the start point of a light beam varies depending on the pixel row. Consequently, this conversion needs to generate pixel data on the parallax interleaved image by an interpolation process based on one or more pixels arranged in the combined parallax image adjacent to one anther in the horizontal direction.

The x and y coordinates of an unconverted pixel in each combined parallax image 503 is defined as Xi and Yi, respectively. The x and y coordinates of the converted pixel in the parallax interleaved image is defined as Xo and Yo, respectively. Image data on a pixel with an x coordinate X and a y coordinate Y is defined as P(X, Y). Then, for example, a linear interpolation process based on the equation shown below can be executed at a high speed. A pixel shader can also be used for the process.

$$P(Xo, Yo) = (j\ P(Xi, Yi) + (m-j)\ P(Xi + 1, Yi))\ /\ m$$
$$j = (4m - 1 - (Yi \% m)) \% m + 1$$

and the operator % denotes a residue. The value of j has only to be as follows. When m = 1, the value of j is always 1. When m = 2, the value of j alternates between 2 and 1 as Yi increments by 1. When m = 3, the value of j alternates between 3 and 2 and 1 as Yi increments by 1. When m = 4, the value of j alternates among 4, 3, 2, and 1 as Yi increments by 1. When m = 5, the value of j alternates between 5, 4, 3, 2, and 1 as Yi increments by 1. That is, the above equation need not necessarily be used.

During this conversion process, the format of the total combined parallax image shown in FIG. 12 involves an intermediate format with n × m rows which is obtained by extracting m rows located at the same positions in each of the n stages of an n stage structure. The conversion thus results in a mapping closed in n × m rows. Repeating this process enables the entire area of the total combined parallax image to be converted into a parallax interleaved image.

FIGS. 14A to 14E are diagrams schematically illustrating a process of converting the three-dimensional image data 503 in the form of the total combined parallax image shown in FIG. 12 into a parallax interleaved image 504 (elemental image array). FIG. 14A shows a conversion from the total combined parallax image 503 into the parallax interleaved image 504 in sub-pixel units in a comparative example having the condition that the $n = 4$ and $m = 4$ as shown in FIG. 5A and described in JPA Publication 2005-258421. The total combined parallax image 503 has combined parallax images (each made of a parallax component image) arranged in an array and providing 16 parallaxes. The unit of 16 rows ($n \times m = 16$) of pixels is extracted from the total combined parallax image and rearranged in the parallax interleaved image 504 (elemental image array) in sub-pixel units. That is, first, the pixels in the first row of each of the four stages of combined parallax images (a total of four pixel rows) are rearranged within the 1st to 4th rows from the top of the parallax interleaved image in accordance with the sub-pixel arrangement shown in FIG. 5A. For these four pixel rows, since $Yi = 0$, $j = 4$ and $(m-j) = 0$. Consequently, no linear interpolation process is executed, resulting in a one-to-one mapping. FIG. 14A shows that one upper left pixel in each combined parallax image 502 (a total of 16 pixels) is placed in the upper left area of the parallax interleaved image. The number of pixels in the first row of each combined parallax image is 350. A similar process is repeated 350 times to fill the 1st to 4th rows from the top of the parallax interleaved image up to their right ends. Then, the pixels in the second row of each of the four stages of combined parallax images (a total of four pixel rows) are rearranged within the 5th to 8th rows from the top of the parallax interleaved image in accordance with the sub-pixel arrangement shown in FIG. 5A. As is apparent from FIG. 5A, the 5th to 8th rows in the parallax interleaved image are displaced rightward from the 1st to 4th rows by one pixel. For these four pixel rows, since $Yi = 1$, $j = 3$ and $(m-j) = 1$. Consequently, two adjacent pixels in each combined parallax image are averaged in the ratio of 3:1 to output the resulting pixel data, resulting in a two-to-one mapping. Then, the pixels in the third row of each of the four stages of combined parallax images (a total of four pixel rows) are rearranged within the 9th to 12th rows from the top of the parallax interleaved image in accordance with the sub-pixel arrangement shown in FIG. 5A. As is apparent from FIG. 5A, the 9th to 12th rows in the parallax interleaved image are displaced rightward from the 1st to 4th rows by two pixels. For these four pixel rows, since $Yi = 2$, $j = 2$ and $(m-j) = 2$. Consequently, two adjacent pixels in each combined parallax image are averaged in the ratio of 2:2 to output the resulting pixel data, resulting in a two-to-one mapping. Then, the pixels in the fourth row of each of the four stages of combined parallax images (a total of four pixel rows) are rearranged within the 13th to 16th rows from the top of the parallax interleaved image in accordance with the sub-pixel arrangement shown in FIG. 5A. As is apparent from FIG. 5A, the 13th to 16th rows in the parallax interleaved image are displaced rightward from the 1st to 4th rows by three pixels. For these four pixel rows, since $Yi = 3$, $j = 1$ and $(m-j) = 3$. Consequently, two adjacent pixels in each combined parallax image are averaged in the ratio of 1:3 to output the resulting pixel data, resulting in a two-to-one mapping. Thus, the 16 rows have been converted, and every unit of 16 rows is subsequently repeatedly processed. The pixels in the fifth row of each of the four stages of combined parallax images (a total of four pixel rows) are rearranged within the 17th to 20th rows from the top of the parallax interleaved image in accordance with the sub-pixel arrangement shown in FIG. 5A. As is apparent from FIG. 5A, the 17th to 20th rows in the parallax interleaved image are not displaced from the 1st to 4th rows. As described above, for this rearrangement, the sub-pixels are interpolated to generate new sub-pixels, which are then arranged at an angle atan $(1/4)$ in a column direction to form an image. This results in a part of the parallax interleaved image corresponding to a 2:1 mapping. The repetition of this process forms a parallax interleaved image, which is then displayed in the display section 331.

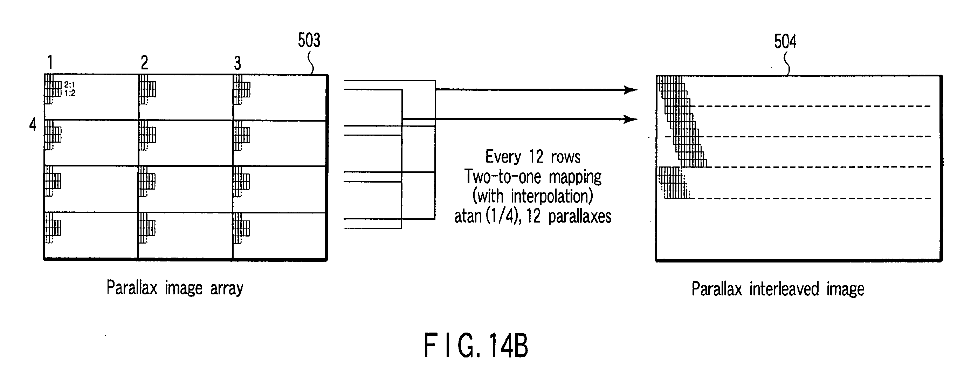

FIG. 14B shows a conversion from the total combined parallax image 503 into the parallax interleaved image 504 in sub-pixel units in an example of the present invention having the condition that the $n = 4$ and $m = 3$ as shown in FIG. 5C. The total combined parallax image 503 has combined parallax images arranged in an array and providing 12 parallaxes. The unit of 12 rows ($n \times m = 12$) of pixels is extracted from the total combined parallax image and rearranged in the parallax interleaved image 504 (elemental image array) in sub-pixel units. In the present example, the display section has $1,400 \times 1,050$ pixels. However, for $m = 3$, 1,400 is indivisible, so that with the lateral symmetry of the display section taken into account, a conversion process is executed within the range of $1,398 \times 1,050$ pixels, obtained by removing one left pixel column and one right pixel column from the $1,400 \times 1,050$ pixels. The number of pixels in the total combined parallax image and in the parallax interleaved image is considered to be $1,398 \times 1,050$. First, the pixels in the first row of each of the four stages of combined parallax images (a total of four pixel rows) are rearranged within the 1st to 4th rows from the top of the parallax interleaved image in accordance with the sub-pixel arrangement shown in FIG. 5C. For these four pixel rows, since $Yi = 0$, $j = 3$ and $(m-j) = 0$. Consequently, no linear interpolation process is executed, resulting in a one-to-one mapping. FIG. 14B shows that one upper left pixel in each combined parallax image (a total of 12 pixels) is placed in the upper left area of the parallax interleaved image. The number of pixels in the first row of each combined parallax image is 466. A similar process is repeated 466 times to fill the 1st to 4th rows from the top of the parallax interleaved image up to their right ends. Then, the pixels in the second row of each of the four stages of combined parallax images (a total of four pixel rows) are rearranged within the 5th to 8th rows from the top of the parallax interleaved image in accordance with the sub-pixel arrangement shown in FIG. 5C. As is apparent from FIG. 5C, the 5th to 8th rows in the parallax interleaved image are displaced rightward from the 1st to 4th rows by one pixel. For these four pixel rows, since $Yi = 1$, $j = 2$ and $(m-j) = 1$. Consequently, two adjacent pixels in each combined parallax image are averaged in the ratio of 2:1 to output the resulting pixel data, resulting in a two-to-one mapping. Then, the pixels in the third row of each of the four stages of combined parallax images (a total of four pixel rows) are rearranged within the 9th to 12th rows from the top of the parallax interleaved image in accordance with the sub-pixel arrangement shown in FIG. 5C. As is apparent from FIG. 5C, the 9th to 12th rows in the parallax interleaved image are displaced rightward from the 1st to 4th rows by two pixels. For these four pixel rows, since Yi = 2, j = 1 and (m-j) = 2. Consequently, two adjacent pixels in each combined parallax image are averaged in the ratio of 1:2 to output the resulting pixel data, resulting in a two-to-one mapping. Thus, the 12 rows have been converted, and every unit of 12 rows is subsequently repeatedly processed. The pixels in the fourth row of each of the four stages of combined parallax images (a total of four pixel rows) are rearranged within the 13th to 16th rows from the top of the parallax interleaved image in accordance with the sub-pixel arrangement shown in FIG. 5C. As is apparent from FIG. 5C, the 13th to 16th rows in the parallax interleaved image are not displaced from the 1st to 4th rows. As described above, for this rearrangement, the pixels are interpolated to generate new pixels, which are then arranged at the angle atan (1/4) in the column direction to form an image. This results in a part of the parallax interleaved image corresponding to a 2:1 mapping. The repetition of this process forms a parallax interleaved image, which is then displayed in the display section 331.

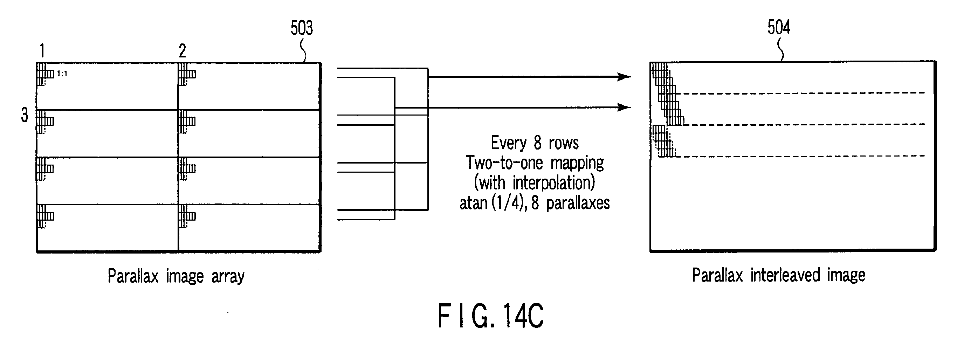

FIG. 14C shows a conversion from the total combined parallax image 503 into the parallax interleaved image 504 in sub-pixel units in an example of the present invention having the condition that the n = 4 and m = 2 as shown in FIG. 5B. The total combined parallax image 503 has combined parallax images arranged in an array and providing 8 parallaxes. The unit 8 rows (n $\times$ m = 8) of pixels is extracted from the total combined parallax image and rearranged in the parallax interleaved image 504 (elemental image array) in sub-pixel units. That is, first, the pixels in the first row of each of the four stages of combined parallax images (a total of four pixel rows) are rearranged within the 1st to 4th rows from the top of the parallax interleaved image in accordance with the sub-pixel arrangement shown in FIG. 5B. For these four pixel rows, since Yi = 0, j = 2 and (m-j) = 0. Consequently, no linear interpolation process is executed, resulting in a one-to-one mapping. FIG. 14C shows that one upper left pixel in each combined parallax image (a total of eight pixels) is placed in the upper left area of the parallax interleaved image. The number of pixels in the first row of each combined parallax image is 700. A similar process is repeated 700 times to fill the 1st to 4th rows from the top of the parallax interleaved image up to their right ends. Then, the pixels in the second row of each of the four stages of combined parallax images (a total of four pixel rows) are rearranged within the 5th to 8th rows from the top of the parallax interleaved image in accordance with the sub-pixel arrangement shown in FIG. 5B. As is apparent from FIG. 5B, the 5th to 8th rows in the parallax interleaved image are displaced rightward from the 1st to 4th rows by one pixel. For these four pixel rows, since Yi = 1, j = 1 and (m-j) = 1. Consequently, two adjacent pixels in each combined parallax image are averaged in the ratio of 1:1 to output the resulting pixel data, resulting in a two-to-one mapping. Then, the pixels in the third row of each of the four stages of combined parallax images (a total of four pixel rows) are rearranged within the 9th to 12th rows from the top of the parallax interleaved image in accordance with the sub-pixel arrangement shown in FIG. 5B. As is apparent from FIG. 5B, the 9th to 12th rows in the parallax interleaved image are not displaced from the 1st to 4th rows. As described above, for this rearrangement, the pixels are interpolated to generate new pixels, which are then arranged at the angle atan (1/4) in the column direction to form an image. This results in a part of the parallax interleaved image corresponding to a 2:1 mapping. The repetition of this process forms a parallax interleaved image, which is then displayed in the display section 331.

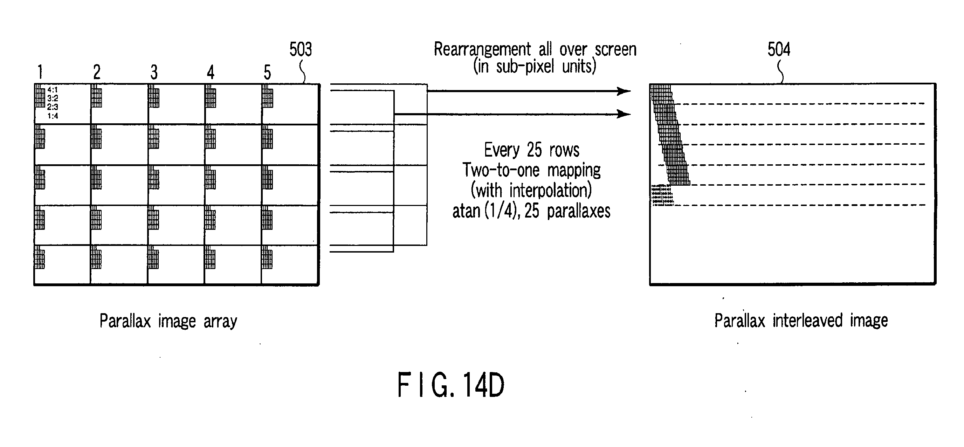

FIG. 14D shows a conversion from the total combined parallax image 503 into the parallax interleaved image 504 in sub-pixel units in a comparative example having the condition that the n = 5 and m = 5 as shown in FIG. 6A. The total combined parallax image 503 has combined parallax images arranged in an array and providing 25 parallaxes. The unit of 25 rows (n $\times$ m = 25) of pixels is extracted from the total combined parallax image and rearranged in the parallax interleaved image 504 (elemental image array) in sub-pixel units. That is, first, the pixels in the first row of each of the five stages of combined parallax images (a total of five pixel rows) are rearranged within the 1st to 5th rows from the top of the parallax interleaved image in accordance with the sub-pixel arrangement shown in FIG. 6A. For these five pixel rows, since Yi = 0, j = 5 and (m-j) = 0. Consequently, no linear interpolation process is executed, resulting in a one-to-one mapping. FIG. 14D shows that one upper left pixel in each combined parallax image (a total of 25 pixels) is placed in the upper left area of the parallax interleaved image. The number of pixels in the first row of each combined parallax image is 280. A similar process is repeated 280 times to fill the 1st to 5th rows from the top of the parallax interleaved image up to their right ends. Then, the pixels in the second row of each of the five stages of combined parallax images (a total of five pixel rows) are rearranged within the 6th to 10th rows from the top of the parallax interleaved image in accordance with the sub-pixel arrangement shown in FIG. 6A. As is apparent from FIG. 6A, the 6th to 10th rows in the parallax interleaved image are displaced rightward from the 1st to 5th rows by one pixel. For these five pixel rows, since Yi = 1, j = 4 and (m-j) = 1. Consequently, two adjacent pixels in each combined parallax image are averaged in the ratio of 4:1 to output the resulting pixel data, resulting in a two-to-one mapping. Then, the pixels in the third row of each of the five stages of combined parallax images (a total of five pixel rows) are rearranged within the 11th to 15th rows from the top of the parallax interleaved image in accordance with the sub-pixel arrangement shown in FIG. 6A. As is apparent from FIG. 6A, the 11th to 15th rows in the parallax interleaved image are displaced rightward from the 1st to 5th rows by two pixels. For these five pixel rows, since Yi = 2, j = 3 and (m-j) = 2. Consequently, two adjacent pixels in each combined parallax image are averaged in the ratio of 3:2 to output the resulting pixel data, resulting in a two-to-one mapping. Then, the pixels in the fourth row of each of the five stages of combined parallax images (a total of five pixel rows) are rearranged within the 16th to 20th rows from the top of the parallax interleaved image in accordance with the sub-pixel arrangement shown in FIG. 6A. As is apparent from FIG. 6A, the 16th to 20th rows in the parallax interleaved image are displaced rightward from the 1st to 5th rows by three pixels. For these five pixel rows, since Yi = 3, j = 2 and (m-j) = 3. Consequently, two adjacent pixels in each combined parallax image are averaged in the ratio of 2:3 to output the resulting pixel data, resulting in a two-to-one mapping. Then, the pixels in the fifth row of each of the five stages of combined parallax images (a total of five pixel rows) are rearranged within the 21st to 25th rows from the top of the parallax interleaved image in accordance with the sub-pixel arrangement shown in FIG. 6A. As is apparent from FIG. 6A, the 21st to 25th rows in the parallax interleaved image are displaced rightward from the 1st to 5th rows by four pixels. For these five pixel rows, since Yi = 4, j = 1 and (m-j) = 4. Consequently, two adjacent pixels in each combined parallax image are averaged in the ratio of 1:4 to output the resulting pixel data, resulting in a two-to-one mapping. Thus, the 25 rows have been converted, and every unit of 25 rows is subsequently repeatedly processed. The pixels in the sixth row of each of the five stages of combined parallax images (a total of four pixel rows) are rearranged within the 26th to 30th rows from the top of the parallax interleaved image in accordance with the sub-pixel arrangement shown in FIG. 6A. As is apparent from FIG. 6A, the 26th to 30th rows in the parallax interleaved image are not displaced from the 1st to 5th rows. As described above, for this rearrangement, the sub-pixels are interpolated to generate new sub-pixels, which are then arranged at the angle atan (1/5) in the column direction to form an image. This results in a part of the parallax interleaved image corresponding to a 2:1 mapping. The repetition of this process forms a parallax interleaved image, which is then displayed in the display section 331.

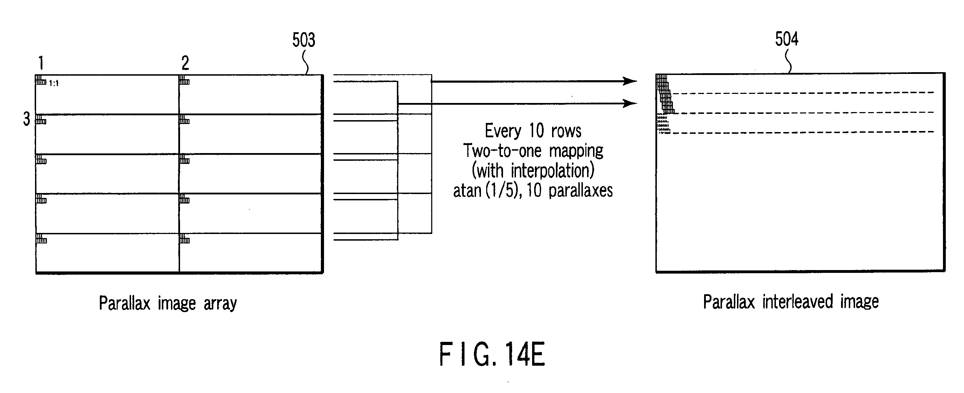

FIG. 14E shows a conversion from the total combined parallax image 503 into the parallax interleaved image 504 in sub-pixel units in an example of the present invention having the condition that the n = 5 and m = 2 as shown in FIG. 6A. The total combined parallax image 503 has combined parallax images arranged in an array and providing 10 parallaxes. The unit of 10 rows (n $\times$ m = 10) of pixels is extracted from the total combined parallax image and rearranged in the parallax interleaved image 504 (elemental image array) in sub-pixel units. That is, first, the pixels in the first row of each of the five stages of combined parallax images (a total of five pixel rows) are rearranged within the 1st to 5th rows from the top of the parallax interleaved image in accordance with the sub-pixel arrangement shown in FIG. 6B. For these five pixel rows, since Yi = 0, j = 2 and (m-j) = 0. Consequently, no linear interpolation process is executed, resulting in a one-to-one mapping. FIG. 14E shows that one upper left pixel in each combined parallax image (a total of 10 pixels) is placed in the upper left area of the parallax interleaved image. The number of pixels in the first row of each combined parallax image is 700. A similar process is repeated 700 times to fill the 1st to 5th rows from the top of the parallax interleaved image up to their right ends. Then, the pixels in the second row of each of the five stages of combined parallax images (a total of five pixel rows) are rearranged within the 6th to 10th rows from the top of the parallax interleaved image in accordance with the sub-pixel arrangement shown in FIG. 6B. As is apparent from FIG. 6B, the 6th to 10th rows in the parallax interleaved image are displaced rightward from the 1st to 5th rows by one pixel. For these five pixel rows, since Yi = 1, j = 1 and (m-j) = 1. Consequently, two adjacent pixels in each combined parallax image are averaged in the ratio of 1:1 to output the resulting pixel data, resulting in a two-to-one mapping. Thus, the 10 rows have been converted, and every unit of 10 rows is subsequently repeatedly processed. The pixels in the third row of each of the five stages of combined parallax images (a total of four pixel rows) are rearranged within the 11th to 15th rows from the top of the parallax interleaved image in accordance with the sub-pixel arrangement shown in FIG. 6B. As is apparent from FIG. 6B, the 11th to 15th rows in the parallax interleaved image are not displaced from the 1st to 5th rows. As described above, for this rearrangement, the sub-pixels are interpolated to generate new sub-pixels, which are then arranged at the angle atan (1/5) in the column direction to form an image. This results in a part of the parallax interleaved image corresponding to a 2:1 mapping. The repetition of this process forms a parallax interleaved image, which is then displayed in the display section 331.

The format of the total combined parallax image shown in FIG. 12 and the conversion process utilizing interpolation, described above, are suitable for the processing of real images or existing multi-visual-point images. For m < n, in this processing, each parallax component image corresponds to an image sampled so as to offer an increased horizontal resolution.

The method described above performs conversion into the combined parallax image having the same numbers of vertical and horizontal pixels before compression. This prevents the adverse effect of a possible increase or decrease in the number of parallax directions caused by a change in the assumed visual distance L, or a variation in the number of pixels in the parallax component image, thus minimizing the degradation of image quality. In particular, compression rate can be increased by utilizing the arrangement and combination of the combined parallax images 502 in which the combined parallax images 502 are correlated with each other. Like common MPEG data and the like, the above three-dimensional image data structure is also applicable not only to recording in recording media but also to distribution utilizing wired or wireless communication means, that is, streaming, and the like.

FIG. 13 shows an example of a table of arrangement of parallax component images in accordance with the one-dimensional IP scheme in which n = 4, m = 2, and the number of parallaxes is 8. Each of 20 parallax component images has a size of 700 × 262 and an aspect ratio of 2 (the horizontal resolution is double the vertical resolution). The parallax component images are divisively arranged on a parallax interleaved image (size: 1,400 × 1,048) in sub-pixel units in accordance with the ranges shown in the arrangement table. With CG rendering, the parallax component images have only to be rendered within the ranges shown in the table.

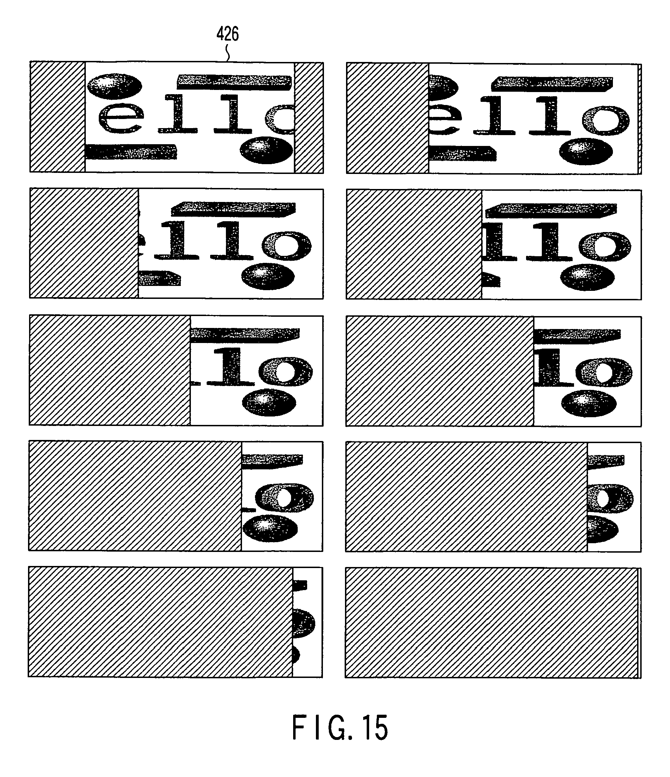

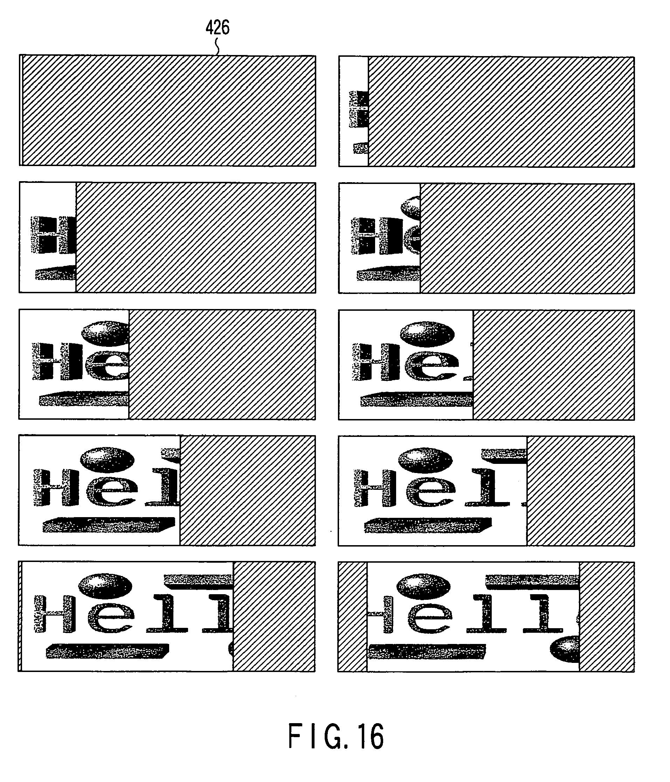

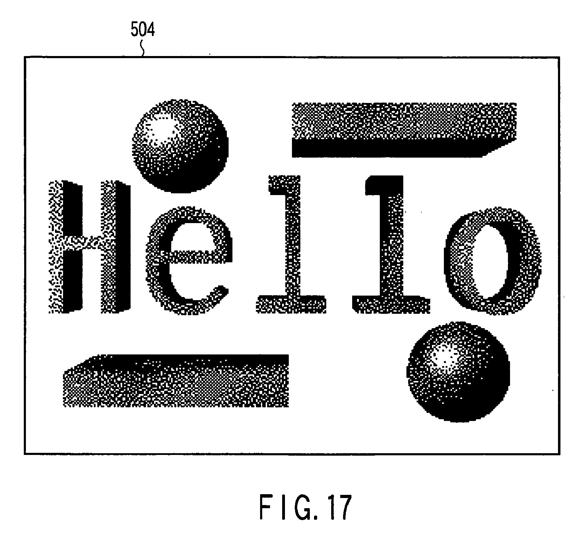

FIG. 15 shows an example of parallax component images for 10 of 20 visual points corresponding to the left eye; the parallax component images are rendered only within the required ranges shown in FIG. 13. FIG. 16 shows an example of parallax component images for 10 of the 20 visual points corresponding to the right eye. FIG. 17 shows an example of a parallax interleaved image obtained by synthesizing the 20-visual-point images in FIGS. 15 and 16. When this image is displayed on the elemental image display section and viewed through the light beam control element 332, a three-dimensional image with an aspect ratio of 1 is observed.

The parallax images in FIGS. 15 and 16 may be obtained by rendering in an aspect ratio of 1 (700 × 524), and to execute conversion into the combined image, the aspect ratio may be changed to 2 taking into account the final positions of the images within the parallax interleaved image (elemental image array).

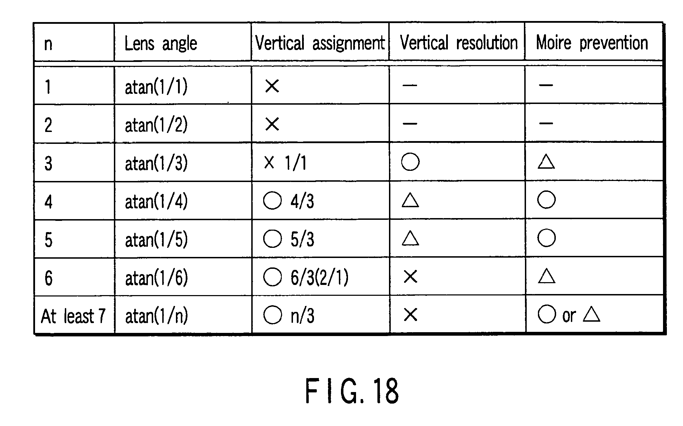

FIG. 18 is a table showing comparison of the display performance of three-dimensional image display devices each having a lenticular sheet placed at a lens angle atan (1/n) to the vertical direction. The figure shows an example in which n is a natural number of 1 to 6 and at least 7. As is apparent from FIG. 18, n >= 4 is required to effectively increase the number of parallaxes by assigning horizontal parallax information to the vertical direction. However, the vertical resolution decreases with increasing n. The possible moire effect can be particularly appropriately prevented when n is not a multiple of 3. Therefore, totally excellent effects can be exerted when n = 4 or 5. Further, as is apparent from the table, if much attention is paid to the vertical resolution and not to the parallax vertical-assignment effect, it is possible that n = 3. The effects of the present invention can be exerted by setting m at 1 or 2.

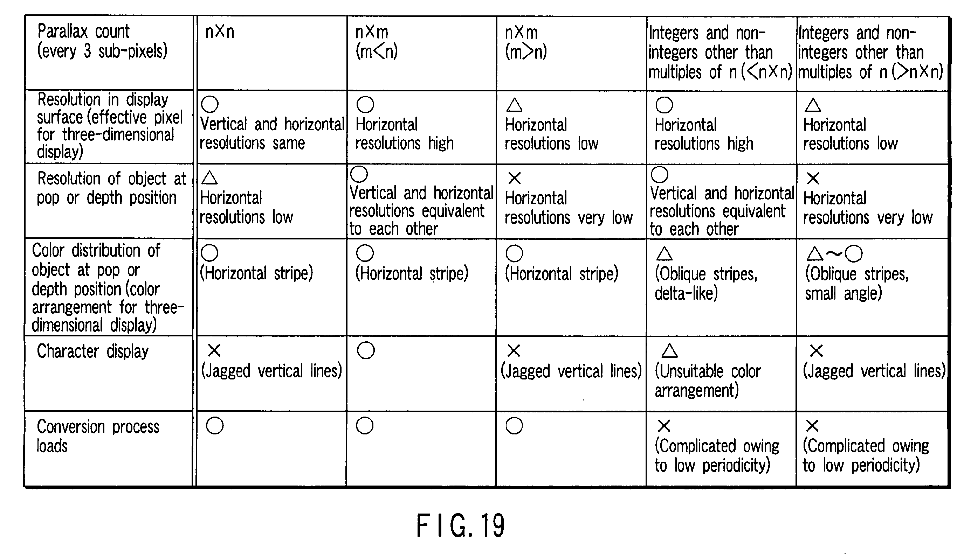

FIG. 19 is a detailed table showing comparison of the display performance of a three-dimensional image display device for which the lens angle is limited to atan (1/4) or atan (1/5). The first column in the table shows the configuration of a comparative example (n × m parallaxes, n = m) shown in FIGS. 5A and 6A of Jpn. Pat. Appln. KOKAI Publication No. 2005-258421 and the present specification, respectively. A major problem with this configuration is jagged vertical lines in character display. Another problem is the low horizontal resolution of a pop or depth portion. The second column in the table shows a configuration with n × m parallaxes (m < n) such as the one in the present example. This configuration is totally excellent because the configuration prevents possible problems with the resolution and character display. The third column in the table shows a configuration for m > n in a comparative example and indicates that the configuration degrades the resolution and character display in contrast to the present invention. The fourth column in the table shows a configuration in which the number of parallaxes is not n × n and in which effective pixels for three-dimensional display are vertically long (for example, lens horizontal pitch is shorter than 3 pitches). This configuration does not affect the resolution but provides a color distribution like a delta arrangement, making the color distribution of a pop or depth portion uneven and affecting color display. The configuration also offers reduced periodicity to complicate the conversion process, increasing the amount of process loads and changing the assumed visual distance. This may degrade design general versatility. The fifth column in the table shows a configuration in which the number of parallaxes is not n × n and in which effective pixels for three-dimensional display are horizontally long (for example, lens horizontal pitch is longer than 3 pitches). This configuration fails to prevent a possible decrease in the resolution of a pop or depth portion and possible jagged vertical lines in character display. The configuration also offers reduced periodicity to complicate the conversion process, increasing the amount of process loads and changing the assumed visual distance. This may degrade design general versatility.

The above method improves the quality of character display in three-dimensional display and the image quality of an object located at a pop or depth position, in a three-dimensional image display device having an obliquely installed light beam control element.

According to an aspect of the present invention, there is provided a three-dimensional image display device with an obliquely installed light beam control element which device can inhibit a decrease in resolution felt during three-dimensional display, a method for displaying a three-dimensional image, and a structure of three-dimensional image data.

**Claims**

**1.** A three-dimensional image display device **characterized by** comprising:

a display section (331) having pixels arranged in a matrix and each comprising three color component sub-pixels arranged in vertical stripes, the display section (331) displaying an array of elemental images (201) at a certain horizontal pitch Pe, parallax component images (426) being assigned in the respective elemental images (201) to display a three-dimensional image, an average value of the horizontal pitch Pe of the elemental images (201) being specified to be equal to or greater than natural number m times as large as the pixel horizontal pitch Ph (m < n, and n = 3, 4, or 5); and

a light beam control element (332, 334, 333) arranged in front of the display section (331) and having optical apertures arranged at a certain horizontal pitch Ps in a substantially horizontal direction and extending linearly in a direction inclined at an angle atan (1/n) to a direction of pixel columns, the horizontal pitch Ps of the light beam control element (332, 334, 333) being specified to be equal to or smaller than natural number m times as large as the pixel horizontal pitch Ph.

2. The device according to claim 1, **characterized in that** the n is 4.

3. The device according to claim 1, **characterized in that** the n is 5.

4. The three-dimensional image display device according to claim 1, **characterized in that** the three-dimensional image display device has a viewing zone within which an observer normally perceives the three-dimensional image, and

the three-dimensional image display device further comprises:

an image processing section (314) which converts a combined parallax image (502) into a parallax interleaved image (504) in which the elemental images (201) are arranged, the combined parallax image (502) being obtained by combining at least one parallax component image (426) of $n \times m$ parallax component images (426) which corresponds to an integration of pixel images generating a group of substantially parallel light rays in the same parallax direction within the viewing zone, the combined parallax component images (426) being in a relationship that the parallax component images (426) correspond to ($n \times m$)-th adjacent parallax directions, the combined parallax image (502) having substantially the same numbers of vertical pixels and horizontal pixels and providing a horizontal resolution higher than a vertical resolution; and

a driving section which allows the display section (331) to display the parallax interleaved image (504).

5. A method for displaying a three-dimensional image, the method using a three-dimensional display device **characterized by** comprising:

a display section (331) having pixels arranged in a matrix and each comprising three color component sub-pixels arranged in vertical stripes, the display section (331) displaying a group of elemental images (201) at a certain horizontal pitch Pe, parallax component images (426) being assigned in the respective elemental images (201) to display a three-dimensional image, an average value of the horizontal pitch Pe of the elemental images (201) being specified to be equal to or greater than natural number m times as large as the pixel horizontal pitch Ph (m<n, and n = 3, 4, or 5); and

a light beam control element (332, 334, 333) arranged in front of the display section (331) and having optical apertures arranged at a certain horizontal pitch Ps in a substantially horizontal direction and extending linearly in a direction inclined at an angle atan (1/n) to a direction of pixel columns, the horizontal pitch Ps of the light beam control element (332, 334, 333) being specified to be equal to or smaller than natural number m times as large as the pixel horizontal pitch Ph, to display the elemental images (201) so as to allow an observer to perceive a three-dimensional image within a viewing zone, the method comprising:

preparing a combined parallax image (502) obtained by combining at least one parallax component image (426) of $n \times m$ parallax component images (426) which corresponds to an integration of pixels generating a group of substantially parallel light rays in the same parallax direction within the viewing zone, the combined parallax component images (426) being in a relationship that the parallax component images (426) correspond to ($n \times m$)-th adjacent parallax directions, the combined parallax image (502) having substantially the same numbers of vertical pixels and horizontal pixels and offering a horizontal resolution higher than a vertical resolution; and

converting the combined parallax image (502) into a parallax interleaved image (504) in which the element images are arranged and displaying the parallax interleaved image (504) in the display section (331) so that the observer perceives the three-dimensional image.

6. The method according to claim 5, **characterized in that** the n is 4.

7. The method according to claim 5, **characterized in that** the n is 5.

8.  A structure of three-dimensional image data, the three-dimensional image data being supplied to a three-dimensional display device to display the elemental images (201) so as to allow an observer to perceive a three-dimensional image within a viewing zone, the three-dimensional display device **characterized by** comprising:

a display section (331) having pixels arranged in a matrix and each comprising three color component sub-pixels arranged in vertical stripes, the display section (331) displaying a group of elemental images (201) at a certain horizontal pitch Pe, parallax component images (426) being assigned in the respective elementsal images to display a three-dimensional image, an average value of the horizontal pitch Pe of the elemental images (201) being specified to be equal to or greater than natural number m times as large as the pixel horizontal pitch Ph (m < n, and n = 3, 4, or 5); and

a light beam control element (332, 334, 333) installed opposite the display section (331) and having optical apertures arranged at a certain horizontal pitch Ps in a substantially horizontal direction and extending linearly in a direction inclined at an angle atan (1/n) to a direction of pixel columns, the horizontal pitch Ps of the light beam control element (332, 334, 333) being specified to be equal to or smaller than natural number m times as large as the pixel horizontal pitch Ph;

the structure of three-dimensional image data has a combined parallax image (502) which is converted into a parallax interleaved image (504) in which the elemental images (201) are arranged, the combined parallax image (502) obtained by combining at least one parallax component image (426) of n × m parallax component images (426) which corresponds to an integration of pixel images generating a group of substantially parallel light rays in the same parallax direction within the viewing zone, the combined parallax component images (426) being in a relationship that the parallax component images (426) correspond to (n × m)-th adjacent parallax directions, the combined parallax image (502) having substantially the same numbers of vertical pixels and horizontal pixels and offering a horizontal resolution higher than a vertical resolution.

9.  The structure according to claim 8, **characterized in that** the n is 4.

10. The structure according to claim 8, **characterized in that** the n is 5.

FIG.1

Ps

334

FIG.2A

Pp

Ps

333

FIG.2B

Storage section ~312

Image
processing section ~314

Driving section ~310

331,332

FIG. 3A

346

343

FIG. 3C

Pe

331

332

346

Ps

d

L

343

W

FIG. 3B

FIG. 4B

FIG. 4C

FIG. 4A

EP 1 971 159 A2

1235679ABDEFH
1245689ACDEG
1345789BCDFG
234678ABCEFG

202

201

## FIG. 5A

123567
124568
134578
234678

202

201

## FIG. 5B

1235679AB
1245689AC
1345789BC
234678ABC

202

201

## FIG. 5C

124679BCE
13568ABD
24579ACE
134689BCE
23578ACD

202

201

F I G. 6A

124679
13568A
24579A
134689
23578A

202

201

F I G. 6B

F I G. 7

FIG.8

F I G. 9

426

−10

−9

| −8 | | −7 | |
| −6 | | −5 | |
| −4 | | −3 | |
| −2 | | −1 | |
| 1 | | 2 | |
| 3 | | 4 | |
| 5 | | 6 | |
| 7 | | 8 | |
| 9 | | | |

10

# FIG.10

**FIG. 11**

**FIG. 12**

| Parallax number | Column number for effective pixel for three-dimensional display | |
| --- | --- | --- |
| | Start ( left end ) | End ( right end ) |
| −10 | 2 | 7 |
| −9 | 2 | 69 |
| −8 | 2 | 132 |
| −7 | 2 | 194 |
| −6 | 2 | 257 |
| −5 | 2 | 319 |
| −4 | 1 | 382 |
| −3 | 1 | 444 |
| −2 | 7 | 507 |
| −1 | 69 | 569 |
| 1 | 132 | 632 |
| 2 | 194 | 694 |
| 3 | 257 | 700 |
| 4 | 319 | 700 |
| 5 | 382 | 699 |
| 6 | 444 | 699 |
| 7 | 507 | 699 |
| 8 | 569 | 699 |
| 9 | 632 | 699 |
| 10 | 694 | 699 |

F I G. 13

EP 1 971 159 A2

503

1    2    3    4

5

3:1
2:2
1:3

Every 16 rows
Two-to-one mapping
(with interpolation)
atan (1/4), 16 parallaxes

504

Parallax image array

Parallax interleaved image

F I G. 14A

EP 1 971 159 A2

503

1    2    3

2:1
1:2

4

Parallax image array

Every 12 rows
Two-to-one mapping
(with interpolation)
atan (1/4), 12 parallaxes

504

Parallax interleaved image

F I G. 14B

503

1　　　2

3

1:1

Parallax image array

Every 8 rows
Two-to-one mapping
(with interpolation)
atan (1/4), 8 parallaxes

504

Parallax interleaved image

F I G. 14C

F I G. 14D

503

1      2

1:1

3

Parallax image array

Every 10 rows
Two-to-one mapping
(with interpolation)
atan (1/5), 10 parallaxes

504

Parallax interleaved image

F I G. 14E

EP 1 971 159 A2

426

F I G. 15

426

F I G. 16

504

F I G. 17

| n | Lens angle | Vertical assignment | Vertical resolution | Moire prevention |
|---|---|---|---|---|
| 1 | atan(1/1) | ✕ | — | — |
| 2 | atan(1/2) | ✕ | — | — |
| 3 | atan(1/3) | ✕ 1/1 | ○ | △ |
| 4 | atan(1/4) | ○ 4/3 | △ | ○ |
| 5 | atan(1/5) | ○ 5/3 | △ | ○ |
| 6 | atan(1/6) | ○ 6/3(2/1) | ✕ | △ |
| At least 7 | atan(1/n) | ○ n/3 | ✕ | ○ or △ |

# FIG. 18

| Parallax count (every 3 sub-pixels) | n×n | n×m (m<n) | n×m (m>n) | Integers and non-integers other than multiples of n (<n×n) | Integers and non-integers other than multiples of n (>n×n) |
|---|---|---|---|---|---|
| Resolution in display surface (effective pixel for three-dimensional display) | ○ Vertical and horizontal resolutions same | ○ Horizontal resolutions high | △ Horizontal resolutions low | ○ Horizontal resolutions high | △ Horizontal resolutions low |
| Resolution of object at pop or depth position | △ Horizontal resolutions low | ○ Vertical and horizontal resolutions equivalent to each other | × Horizontal resolutions very low | ○ Vertical and horizontal resolutions equivalent to each other | × Horizontal resolutions very low |
| Color distribution of object at pop or depth position (color arrangement for three-dimensional display) | ○ (Horizontal stripe) | ○ (Horizontal stripe) | ○ (Horizontal stripe) | △ (Oblique stripes, delta-like) | △～○ (Oblique stripes, small angle) |
| Character display | × (Jagged vertical lines) | ○ | × (Jagged vertical lines) | △ (Unsuitable color arrangement) | × (Jagged vertical lines) |
| Conversion process loads | ○ | ○ | ○ | × (Complicated owing to low periodicity) | × (Complicated owing to low periodicity) |

FIG. 19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9905559 A
- JP 2005258421 A